(19) Europäisches Patentamt
European Patent Office
Office européen des brevets

(11) Numéro de publication : **0 436 447 B1**

# (12) FASCICULE DE BREVET EUROPEEN

(45) Date de publication du fascicule du brevet : **01.06.94 Bulletin 94/22**

(51) Int. Cl.[5] : **B01D 71/42,** B01D 71/68, B01D 71/34, B01D 71/30

(21) Numéro de dépôt : **90420527.5**

(22) Date de dépôt : **05.12.90**

## (54) Membrane semi-perméable asymétrique pour le traitement des liquides biologiques.

(30) Priorité : **22.12.89 FR 8917397**

(43) Date de publication de la demande : **10.07.91 Bulletin 91/28**

(45) Mention de la délivrance du brevet : **01.06.94 Bulletin 94/22**

(84) Etats contractants désignés : **AT BE CH DE DK ES FR GB GR IT LI LU NL SE**

(56) Documents cités :
**EP-A- 0 250 337**
**GB-A- 2 096 941**
**US-A- 4 749 619**

(56) Documents cités :
**DESALINATION, vol. 70, nos. 1-3, novembre 1988, pages 277-298, Elsevier Science Publishers, Amsterdam, NL; F. VIGO et al.: "Ultrafiltration membranes obtained by poly(acrylonitrile) grafted onto poly(vinylchloride"**

(73) Titulaire : **HOSPAL INDUSTRIE**
**7, Avenue Lionel Terray,**
**BP 126**
**F-69883 Meyzieu Cédex (FR)**

(72) Inventeur : **Brun, Claude**
**91 rue Marius Berliet**
**F-69008 Lyon (FR)**
Inventeur : **Angleraud, René**
**35 rue des Géraniums**
**F-69320 Feyzin (FR)**

**EP 0 436 447 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne une membrane semi-perméable asymétrique constituée d'au moins un polymère hydrophobe et d'au moins un copolymère d'acrylonitrile, convenant pour le traitement des liquides biologiques destinés à être restitués au corps humain ou animal tels que le plasma ou le sang, notamment à l'aide de reins artificiels par hémodialyse et/ou par ultrafiltration, ou par plasmaphérèse.

La présente invention a également pour objet un procédé de fabrication de cette membrane.

Des membranes semi-perméables pour le traitement du sang à base de copolymère d'acrylonitrile sont déja connues. Parmi les plus satisfaisantes, on peut citer celles décrites dans le brevet français n° 2.529.464. En l'occurence, il s'agit de fibres creuses semi-perméables du type symétrique et à structure mésoporeuse homogène sensiblement uniforme dans toute leur épaisseur. Ces fibres sont constituées d'un copolymère d'acrylonitrile et d'un comonomère oléfiniquement insaturé porteur de groupements sulfoniques éventuellement salifiés.

Elles sont obtenues par abaissement de la température d'une solution de polymère en sortie de la filière jusqu'à l'obtention d'une structure gel homogène, suivi d'un lavage et d'un étirage. Ce procédé conduit à des fibres creuses ayant de remarquables caractéristiques de perméabilité pour la dialyse et l'ultrafiltration et présentant une biocompatibilité excellente.

Cependant, ces membranes présentent certains inconvénients. Ainsi, elles doivent être conservées à l'état humide ou imprégnées d'une substance hygroscopique à faible tension de vapeur, par exemple de la glycérine, sinon elles perdraient irréversiblement leur perméabilité ainsi que leurs caractéristiques mécaniques et deviendraient en conséquence inutilisables en hémodialyse.

Dans le domaine médical, il est connu des membranes semi-perméables asymétriques, constituées d'un polymère hydrophobe et d'un polymère hydrophile et utilisées pour le traitement du sang.

Par exemple, le brevet européen n° 168.783 décrit une membrane microporeuse à base d'un polymère hydrophobe et d'un polymère hydrophile choisi soluble dans l'eau et utilisé comme porogène: le polymère hydrophile est, en effet, extrait en grande partie par le liquide de précipitation en sortie de filière. Le polymère hydrophile restant est également extractible par les milieux aqueux, ce qui n'est pas souhaitable dans les applications médicales.

Dans un autre domaine technique, à savoir celui de l'ultrafiltration et/ou de la microfiltration industrielle, on connait par le brevet américain n°4.810.384 une membrane semi-perméable hydrophile et séchable à base de polyfluorure de vinylidène (PVDF) et de polymère hydrophile. A titre d'exemple de polymère hydrophile, ce brevet cite les copolymères d'acrylonitrile et de monomères contenant des groupements sulfoniques, et en particulier, les copolymères d'acrylonitrile et de méthallyle sulfonate de sodium avec éventuellement du méthacrylate de méthyle. Conformément à ce brevet, cette membrane est obtenue à partir d'une solution homogène de PVDF et de polymère hydrophile, mise en forme puis coagulée. La membrane obtenue est semi-perméable, hydrophile et séchable (sans perte de ses caractéristiques).

Un objectif de la présente invention est une membrane semi-perméable convenant pour le traitement des liquides biologiques destinés à être restitués au corps humain ou animal et présentant des améliorations notables par rapport aux membranes de l'art antérieur précité.

Plus précisément, un objectif de l'invention est une membrane semi-perméable dont les performances (notamment la perméabilité et la biocompatibilité) sont élevées et proches, voire égales ou supérieures à celles atteintes par les membranes semi-perméables décrites dans le brevet français n°2.529.464 et qui ne présentent pas les défauts de ces dernières.

C'est-à-dire, il est recherché une membrane semi-perméable répondant de façon plus satisfaisante que les membranes de l'art antérieur précité au cahier des charges suivant :

- une bonne perméabilité à l'eau,
- une perméabilité sélective aux molécules de taille déterminée selon l'application médicale envisagée, plasmaphérèse ou hémodialyse. Par exemple, en hémodialyse, la membrane doit être perméable aux métabolites tels que l'urée, la créatinine, aux "moyennes molécules" et aux solutés de masse moléculaire plus élevée tout en restant imperméable aux protéines du sang dont la masse moléculaire est supérieure ou égale à celle de l'albumine,
- une bonne biocompatibilité,
- des propriétés mécaniques suffisantes, et en particulier une bonne rigidité ainsi qu'une bonne stabilité dimensionnelle quand la membrane passe de l'état sec à l'état mouillé.

Par le terme biocompatibilité, on entend une membrane compatible du point de vue biologique qui ne provoque pas ou peu de modifications des paramètres biologiques. Plus précisément, une membrane sera biocompatible si elle présente un caractère d'inertie vis-à-vis des deux principaux mécanismes de défense de l'organisme, à savoir l'hémostase et l'immunité.

L'hémostase assure la protection de l'organisme contre la perte de sang, entre autres, par le phénomène de coagulation qui se déclenche lorsque le sang est au contact d'une surface thrombogène.Dans la présente étude, pour caractériser le pouvoir thrombogène d'une membrane on utilisera les marqueurs précoces d'une activation de la coagulation, à savoir :

- l'activation plaquettaire qui se traduit généralement par la libération ou la génération de substances biologiques, en particulier de βthromboglobuline (βTG), et
- un indicateur d'une activation de la coagulation tel que le fibrinopeptide A (FPA) plasmatique qui est le premier peptide provenant du clivage du fibrinogène pour donner le caillot de fibrine.

L'immunité assure la défense de l'organisme contre toute substance étrangère, et dans notre cas, contre la membrane. Les paramètres qui sont à la fois les plus sensibles et les mieux connus pour caractériser le déclenchement d'une réaction immunitaire sont :

- l'activation du système du complément par le dosage de la protéine C3 activée du complément (C3a),
- les protéinases (Elastases) qui sont des médiateurs chimiques relargués par des leucocytes.

La membrane d'hémodialyse la plus biocompatible actuellement connue est la membrane, objet du brevet français 2.529.464. Un objectif de l'invention est une membrane semi-perméable à propriétés mécaniques améliorées qui possède une biocompatibilité proche, voire supérieure à celle de la membrane décrite dans le brevet français 2 529 464.

Un autre objectif de l'invention est une membrane semi-perméable qui, à la différence de la membrane décrite dans le brevet français 2 529 464, conserve ses caractéristiques quand elle passe de l'état sec à l'état humide, ou inversement, en l'absence de traitement particulier, physique ou chimique, pour sa conservation.

Un autre objectif de l'invention est une membrane semi-perméable exempte de toute toxicité, et en particulier exempte de matières extractibles par les milieux aqueux tels que les liquides biologiques (sang, plasma...) ou le liquide de dialyse.

Un autre objectif de l'invention est de proposer des procédés simples de préparation de telles membranes semi-perméables, selon des conditions douces ne faisant pas intervenir de réactions chimiques et ne nécessitant pas la présence d'additifs particuliers susceptibles d'être extraits lors des traitements, et par conséquent permettant d'obtenir des membranes exemptes de traces de résidus réactionnels.

Pour atteindre ces différents objectifs, la présente invention propose une membrane semi-perméable asymétrique, comprenant une couche support et au moins une couche superficielle dense ou mésoporeuse ou microporeuse, dite couche de séparation et convenant pour le traitement des liquides biologiques destinés à être restitués au corps humain ou animal tels que le sang ou le plasma, cette membrane étant caractérisée en ce que :

- elle est à base d'au moins un polymère hydrophobe et d'au moins un copolymère insoluble dans l'eau, ledit copolymère (ci-après désigné par copolymère) étant à base d'acrylonitrile, d'au moins un monomère sulfonique éventuellement salifié et éventuellement d'au moins un troisième monomère oléfiniquement insaturé, non ionique et non ionisable,
- la concentration superficielle en copolymère de la couche de séparation est supérieure à la concentration moyenne en copolymère dans la membrane,
- cette membrane, à l'état sec, est mouillable à l'eau,
- et les proportions respectives du copolymère et du polymère hydrophobe sont ajustées de sorte que la variation dimensionnelle de la membrane non maintenue n'excède pas + 3 % quand elle passe de l'état sec à l'état humide à 40°C.

Par membrane semi-perméable mouillable à l'eau, on entend une membrane pour laquelle la pénétration de l'eau est spontanée sans contrainte telle qu'une pression.

Par état sec, on entend l'état d'équilibre hygrométrique de la membrane avec l'atmosphère ambiante. Dans cet état, la perte de poids de la membrane résultant d'un traitement de 24 h à 50°C dans une étuve ventilée est inférieure à 0,5 %.

Conformément à un mode de réalisation préféré de la présente invention, les proportions respectives du copolymère et du polymère hydrophobe sont ajustées de sorte que la variation dimensionnelle de la membrane non maintenue n'excède pas + 2 % quand elle passe de l'état sec à l'état humide à 40°C. En outre, dans ces conditions, il ne se produit pas de phénomène de retrait.

Selon la présente invention, l'expression "membrane semi-perméable asymétrique "désignera toute membrane semi-perméable possédant une (ou deux) couche superficielle qui se distingue du reste de la membrane par des pores de plus petite dimension, ce qui inclut notamment les membranes possédant une structure dite à gradient de pores. La dimension des pores de la couche superficielle est variable selon l'application envisagée.

En hémodialyse, la taille des pores est généralement de l'ordre de quelques centaines d'Angströms ou inférieure. La couche superficielle est dite dense lorsque la dimension des pores est inférieure à 10 Angströms.

Quand la taille des pores varie entre 10 Angströms et quelques centaines d'Angströms, on parle de couche mésoporeuse. En plasmaphérese, la taille des pores est de l'ordre de quelques dixièmes de micromètres : la couche superficielle est alors dite microporeuse. Une telle couche superficielle constitue la couche active de séparation responsable pour une grande part du rejet sélectif des molécules au delà d'une taille déterminée. Elle est avantageusement disposée au contact des liquides biologiques à traiter. Dans la suite de la description, la couche superficielle sera dénommée couche de séparation, et le reste de la membrane sera dénommée couche support.

La variation de la dimension moyenne des pores selon l'épaisseur de la membrane conforme à l'invention peut être globalement continue: cette structure est dite à gradient de pores.

La variation de la dimension moyenne des pores selon l'épaisseur de la membrane conforme à l'invention peut également être discontinue: à savoir, des pores fins dans la couche de séparation et des pores de dimension nettement supérieure dans la couche support. Par exemple, la couche support peut présenter une structure en doigt de gant et/ou une structure alvéolaire avec ou sans vacuoles.

De manière surprenante, il a été trouvé que la membrane selon la présente invention, bien que constituée d'un mélange de polymères, et en particulier, d'une teneur limitée en copolymère ceci afin d'obtenir une bonne stabilité dimensionnelle, permet d'atteindre les objectifs poursuivis. La teneur globale maximale acceptable de copolymère dans la membrane est fonction essentiellement de la nature chimique du polymère hydrophobe utilisé. De préférence, on choisit une teneur globale en copolymère dans la membrane n'excédant pas 40 % en poids (% donné par rapport à la quantité totale de polymères). Les meilleures performances ont été obtenues avec des membranes comprenant au plus 30 % en poids de copolymère.

Egalement, il a été trouvé que les performances de la membrane selon l'invention sont liées à un enrichissement superficiel en copolymère de la couche de séparation. Cet enrichissement est à l'origine de la bonne biocompatibilité de la membrane selon l'invention qui, de ce fait, peut être classée parmi les meilleures membranes actuellement connues. Aussi, la membrane selon l'invention est suffisamment hydrophile pour assurer une perméabilité hydraulique élevée, même quand elle est à l'état sec. De préférence, la concentration superficielle en copolymère à l'extrême surface de la couche de séparation (ci-après désignée par "couche superficielle"), est au moins égale à 30 % en poids. C'est en effet avec de telles concentrations superficielles que les meilleures performances sont atteintes par la membrane selon l'invention.

On notera que la membrane décrite dans le brevet américain US 4810 384 ne présente pas d'enrichissement superficiel en copolymère.

La membrane semi-perméable conforme à l'invention présente avantageusement la combinaison des propriétés suivantes :

- une perméabilité hydraulique par convection modérée à élevée, ajustable en fonction de l'application visée ;
- une perméabilité diffusive et une sélectivité aux molécules de taille déterminée selon l'application médicale envisagée ;
- une absence de toxicité notamment en raison de l'absence de matières extractibles. En outre, la membrane selon l'invention est une membrane qui ne nécessite pas de traitement particulier pour sa conservation, un dépôt de substance hygroscopique par exemple. Egalement, la membrane selon l'invention ne provoque pas d'hémolyse dans les conditions expérimentales décrites dans la norme DIN 58 361 partie 4 ; la membrane selon l'invention n'est en outre pas cytotoxique ;
- une bonne biocompatibilité tant sur le plan de l'hémostase que de l'immunité ;
- des caractéristiques mécaniques satisfaisantes, en particulier une bonne stabilité dimensionnelle quand la membrane passe de l'état sec à l'état humide, ou inversement, ainsi qu'une bonne rigidité. Cette rigidité est telle que, quand la membrane selon l'invention est conformée en fibre creuse, il n'est pas nécessaire de structurer d'une manière particulière le faisceau de fibres à l'intérieur d'un appareil de traitement pour avoir une bonne circulation de liquide entre les fibres.

Comme précisé ci-dessus, la membrane semi-perméable selon l'invention peut être sous la forme d'une membrane plane ou d'une fibre creuse. Sous la forme d'une fibre creuse, elle possède un diamètre externe d'environ 1000 micromètres ou inférieur, et de préférence inférieur à 500 micromètres, et une épaisseur de paroi généralement comprise entre 10 et 200 micromètres, et de préférence entre 20 et 80 micromètres.

Avantageusement quand elle est sous la forme d'une fibre creuse, la couche de séparation est située sur la paroi interne de la fibre. Eventuellement, elle peut comporter également une couche de séparation sur la paroi externe.

Quand elle se présente sous la forme d'une membrane plane, l'épaisseur de la membrane selon l'invention varie généralement entre 10 et 500 micromètres, et de préférence entre 20 et 300 micromètres.

Conformément à l'invention, on entend par "polymère hydrophobe" un polymère ayant peu d'affinité pour les milieux aqueux et présentant une bonne stabilité dimensionnelle quand il passe de l'état sec à l'état humide.

De préférence, on choisit un polymère hydrophobe tel que, mis sous la forme d'une membrane semi-perméable, celle-ci présente une variation sur l'épaisseur ou sur la longueur qui n'excède pas 0,5 % quand elle passe de l'état sec à l'état humide. En outre, il va de soi que le polymère hydrophobe choisi ne doit pas être toxique, et en particulier ne doit pas comprendre des substances susceptibles d'être extraites.

A titre d'exemple de polymère hydrophobe convenant à l'invention, on peut citer des polyarylsulfones, des polyfluorures de vinylidène (PVDF), des polychlorures de vinyle. Parmi les polyarylsulfones convenant à la présente invention, on choisit particulièrement les polyarylsulfones comportant le motif suivant :

a) 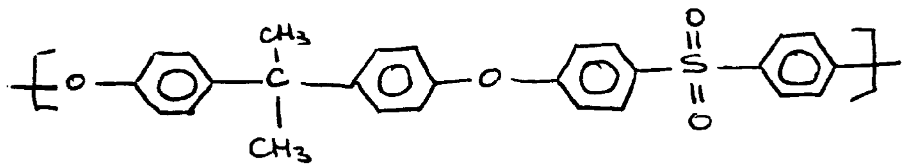

ou

b) 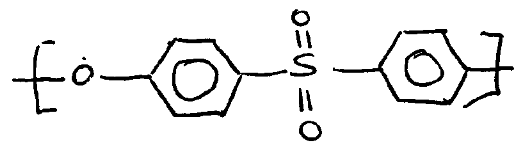

Les polyarylsulfones de motif a) sont communément appelées polysulfones ou PSF. Les polyarylsulfones de motif b) sont appelées polyéthersulfones ou PES.

Comme copolymère d'acrilonitrile, on choisit de préférence des copolymères insolubles dans l'eau pour lesquels la proportion de monomère sulfonique, éventuellement salifié est comprise entre 1 et 50 % (en nombre) et de préférence entre 3 et 15 %.

La préparation de copolymère est bien connue en soi. Avantageusement, on utilise le procédé de copolymérisation décrit dans le brevet français 2076 854.

Comme monomère sulfonique convenant à l'invention, on peut citer les acides vinylsulfonique, allylsulfonique, méthallylsulfonique, allyoxy- et méthallyloxy éthyl sulfonique, styrène sulfonique, vinyloxybenzène sulfonique, allyloxy- et méthallyloxybenzène sulfonique, ainsi que les sels de ces divers acides, de préférence leurs sels alcalins.

Comme monomère oléfiniquement insaturé, non ionique et non ionisable, convenant à l'invention, on peut citer des hydrocarbures éthyléniques tels que le butadiène et le styrène ; les chlorures de vinyle et de vinylidène ; les éthers de vinyle ; les cétones insaturées telles que la buténone, la phényl vinylcétone, la méthylisopropénylcétone ; les esters de vinyle et d'acides carboxyliques, par exemple le formiate, l'acétate, le propionate, les butyrates, le benzoate ; les esters d'alcoyle, de cycloalcoyle ou d'aryle d'acides aliphatiques insaturés mono- ou polycarboxyliques tels que les acrylates, méthacrylates, maléates, fumarates, citraconates, mésaconates, itaconates et aconitates de méthyle, éthyle, propyle, butyle, β-hydroxyéthyle.

Ces copolymères sont bien connus en soi et ont été, notamment décrits dans le brevet américain US 4749 619 et dans le brevet français 2105502.

Avantageusement, on utilise les copolymères à base d'acrylonitrile et de méthallylsulfonate de sodium tel que le copolymère de dénomination commerciale AN69 fabriqué par HOSPAL, avec lesquels les meilleures performances ont été obtenues.

Selon la nature chimique du polymère hydrophobe et du copolymère utilisés, les proportions respectives de ces deux polymères doivent être ajustées afin d'obtenir une membrane conforme à l'invention.

Ainsi, lorsque la membrane est à base de PVDF et de copolymère, il est recommandé de choisir un rapport massique global PVDF sur copolymère excédant 70/30 pour l'obtention d'une membrane présentant une bonne stabilité dimensionnelle. En outre, on choisit un rapport massique global PVDF sur copolymère qui soit au plus égal à 99/1 afin de bénéficier d'un degré d'enrichissement suffisant à la surface extérieure de la couche de séparation. De préférence encore, dans ce cas précis, on choisit un rapport massique global PVDF sur copolymère compris entre 95/5 et 80/20.

Par contre, lorsque la membrane est à base de polyarylsulfone et de copolymère, on peut préparer une membrane qui soit en conformité avec l'invention avec une proportion globale de copolymère plus élevée que dans le cas précédent. De préférence, le rapport massique global polyarylsulfone sur copolymère est au moins égal à 60/40. De préférence encore, ce rapport est au moins égal à 70/30.

Toutefois, comme il sera précisé dans la suite de la description, les valeurs des limites inférieures et supérieures des proportions respectives de polymère hydrophobe et de copolymère peuvent également dépendre du procédé utilisé pour préparer ces membranes.

La présente invention a également pour objet un premier procédé de préparation de la membrane conforme à l'invention qui est caractérisé par les étapes suivantes :

a) préparation d'une solution constituée de :
- au moins un polymère hydrophobe,
- au moins un copolymère insoluble dans les milieux aqueux, à base d'acrylonitrile, d'au moins un monomère sulfonique éventuellement salifié et éventuellement d'au moins un troisième monomère, oléfiniquement insaturé, non ionique et non ionisable,

les proportions respectives du copolymère et du polymère hydrophobe étant ajustées de sorte que la variation dimensionnelle de la membrane non maintenue n'excède pas + 3 % quand elle passe de l'état sec à l'état humide à 40°C,
- au moins un solvant organique du polymère hydrophobe et du copolymère dont la température d'ébullition est supérieure à la température de mise en oeuvre de la solution,
- au moins un non solvant du polymère hydrophobe, éventuellement non solvant du copolymère, miscible avec le solvant organique,

les proportions respectives du polymère hydrophobe, du copolymère, du solvant organique et du non solvant étant ajustées afin que :
- la solution soit thermodynamiquement instable et louche mais néanmoins macroscopiquement homogène, et ne donne pas lieu à démixtion à la température de mise en oeuvre,
- un abaissement de la température de la solution provoquerait l'évolution spontanée de la solution vers un état de gel,

b) Extrusion de la solution ainsi obtenue au travers d'une filière,

c) Dès la sortie de la filière, l'extrusion est suivie d'une opération de coagulation par contact partiel ou total du produit extrudé avec un liquide coagulant, chimiquement inerte vis à vis du polymère hydrophobe et du copolymère, et avec lequel :
- le polymère hydrophobe a peu, voire pas d'affinité,
- le copolymère a de l'affinité sans y être soluble,

Cette opération de coagulation étant effectuée pendant une durée suffisante pour obtenir la solidification du produit extrudé en membrane,

d) Puis lavage de la membrane obtenue,

e) Suivi éventuellement d'un séchage de la membrane.

Conformément à un mode de réalisation préféré du procédé selon l'invention, les proportions respectives du copolymère et du polymère hydrophobe sont ajustées de sorte que la variation dimensionnelle de la membrane non maintenue n'excède pas + 2 % quand elle passe de l'état sec à l'état humide à 40°C.

La solution à extruder est volontairement mise dans un état proche de l'instabilité. On a en effet observé que, seules de telles solutions permettent d'aboutir à un enrichissement superficiel en copolymère si on opère conformément au procédé précité .

Par état proche de l'instabilité, on entend un état proche de la démixtion qui, en outre, serait capable d'évoluer spontanément vers l'état de gel par simple refroidissement. Visuellement, cet état se traduit par une absence de limpidité, c'est-à-dire que la solution est louche avec une coloration pouvant varier du bleuté jusqu'à un aspect laiteux. Ceci résulte de l'incompatibilité du polymère hydrophobe et du copolymère, ainsi que de la présence de non solvant dans la solution.

La mise en évidence de l'enrichissement superficiel peut être établie de la manière suivante :

La composition superficielle de la couche de séparation est déterminée par spectroscopie de photoélectrons (ESCA pour Electron Spectroscopy for Chemical Analysis). La profondeur analysée, dans les conditions courantes d'utilisation de la technique, est de l'ordre de 50 à 100 angströms. Cette analyse montre que la concentration superficielle en copolymère, dans la couche analysée, est supérieure à la concentration moyenne en copolymère dans la membrane.

En outre, il apparaît que la valeur ainsi déterminée de concentration superficielle en copolymère est une valeur par défaut par rapport à la concentration effective à l'extrême surface du matériau.

En effet, bien que la profondeur analysée soit très faible, il existe un gradient de concentration sur la profondeur analysée dans le sens d'une concentration croissante en copolymère vers l'extrême surface.

Ce fait peut être mis en évidence en procédant à une analyse ESCA dans des conditions particulières dites de distribution angulaire. La diminution de l'angle de réception des photoélectrons réémis par la couche superficielle sous l'impact du rayonnement X permet d'analyser des profondeurs de plus en plus faibles depuis environ une centaine d'angströms jusqu'à environ une dizaine d'angströms.

On constate alors que la concentration en copolymère tend à augmenter lorsque la profondeur d'analyse

diminue, ce qui indique bien qu'il existe un gradient de concentration depuis les couches les plus profondes analysées jusque vers la couche superficielle proprement dite constituant l'extrême surface de la membrane.

Ce gradient de concentration existe au moins sur une profondeur de l'ordre de 50 à 100 angströms correspondant aux conditions courantes des analyses qui sont pratiquées.

Un indicateur de la concentration en copolymère dans la couche superficielle peut également être fourni par la mesure de la mouillabilité par l'eau. En effet, c'est la composition superficielle de l'extrême surface de la membrane qui détermine, pour une topographie de surface donnée, le degré de mouillabilité par l'eau.

La membrane faisant l'objet de la présente invention est à base d'un mélange de polymère hydrophobe peu ou pas mouillable par l'eau et du copolymère mouillable précédemment défini. La membrane présente donc un degré de mouillabilité intermédiaire d'autant plus élevé que la concentration superficielle en copolymère est élevée.

On constate que le degré de mouillabilité par l'eau de la membrane selon l'invention est supérieur à celui attendu compte tenu de la concentration superficielle en copolymère déterminée par analyse ESCA. Ceci peut être dû au fait que la concentration effective de copolymère dans la couche d'extrême surface est supérieure à la valeur fournie par l'analyse ESCA pour les raisons exposées précédemment, ce que l'on démontre expérimentalement.

Par conséquent, on peut utiliser le degré de mouillabilité à l'eau pour évaluer la concentration superficielle en copolymère. Dans le cas d'une membrane conforme à l'invention, obtenue conformément au premier procédé selon l'invention et à partir de 5 à 30 % en poids de copolymère, (pourcentage donné par rapport à la quantité totale de polymères utilisés), les caractéristiques de mouillabilité par l'eau d'une telle membrane correspondent généralement à une concentration en copolymère dans la couche superficielle supérieure à 30 % en poids.

Afin de préparer une solution conforme à l'étape a), on utilise généralement une teneur en polymères (le terme "polymères" désigne le polymère hydrophobe et le copolymère) comprise entre 10 % et 30 % en poids dans la solution, et de préférence comprise entre 20 % et 28 % en poids. Pour une faible teneur en polymères, de l'ordre de 10 %, les membranes réalisées présentent une résistance mécanique moyenne. Dans ce cas, il convient de les conformer en membranes planes, et de préférence de les supporter, par exemple à l'aide d'un matériau non tissé. A des teneurs en polymères plus élevées, la solution peut aussi bien être conformée en membrane plane qu'en fibre creuse.

Par ailleurs, les solutions à teneurs faibles en polymères, contenant au moins 10 % en poids de polymères, favorisent la formation de pores de grands diamètres et sont avantageusement utilisées pour préparer des membranes de plasmaphérèse. Les solutions à teneurs élevées en polymères, de l'ordre de 20 % à 30 % en poids de la solution conduisent à la formation de membranes dont les pores sont plus petits et sont avantageusement utilisées à la fabrication de membranes d'hémodialyse. Toutefois, les solutions à teneurs élevées en polymères peuvent convenir à la fabrication de membranes de plasmaphérèse si on opère dans des conditions qui autorisent la formation de pores dont le diamètre est de l'ordre de quelques dixièmes de micromètres, par exemple par étirage.

Au delà de 30 % en poids de polymères dans la solution, les membranes obtenues sont plus étanches, c'est-à-dire que leur perméabilité en est affectée.

Conformément au procédé selon l'invention, le non solvant est choisi mauvais solvant ou non solvant du polymère hydrophobe. Il peut également être mauvais solvant ou non solvant du copolymère. En outre, il doit être miscible au solvant organique, et de préférence il doit également être miscible avec le liquide coagulant.

La présence de non solvant dans la solution accentue son caractère d'instabilité vis-à-vis du liquide coagulant lorsqu'ils sont mis en contact. On suppose que ceci favorise la séparation du polymère hydrophobe et du copolymère ; également, on suppose que l'affinité du copolymère pour le liquide coagulant permet d'aboutir à un enrichissement suffisant en copolymère de la couche superficielle de séparation.

On introduit de 2 % à 20 % en poids de non solvant dans la solution à extruder et de préférence encore de 2 à 10 % en poids quand il s'agit d'un non solvant fort. Par non solvant fort, on entend un non solvant très précipitant lorsqu'il est utilisé comme liquide coagulant en étant porté au contact de la solution.

A titre d'exemple de non solvant, on peut citer : des alcools par exemple l'éthoxy-2-éthanol, le 2-butoxyéthanol ; des diols tels que l'éthylène glycol, l'hexanediol, le diéthylène glycol, l'eau. Convient également un mélange de non solvants, de préférence un mélange de non solvant fort tel que l'eau et de non solvant faible tel que le glycérol.

Parmi les solvants organiques convenant à la préparation de la solution conformément au premier procédé selon l'invention, on peut citer la N-méthyl 2 pyrrolidone (NMP), le N,N-diméthylformamide (DMF), la N,N-diméthyl acétamide, le diméthyl sulfoxyde ou un mélange de ces solvants. De préférence, on utilise un solvant organique miscible à l'eau tel que la NMP et/ou le DMF.

Après dissolution et mélange du polymère hydrophobe et du copolymère à une température supérieure à

la température de gélification, généralement à une température comprise entre 30 et 120°C, et de préférence entre 50 et 100°C, on obtient une solution louche mais néanmoins macroscopiquement homogène.

Puis on procède à l'extrusion de la solution ainsi préparée. L'opération d'extrusion consiste à faire passer la solution au travers d'une filière en forme de fente pour l'obtention d'une membrane plane, ou d'une filière de forme annulaire avec un orifice axial et disposée sensiblement verticalement pour l'obtention d'une fibre creuse. La membrane plane peut également être obtenue par coulée de la solution sur une plaque en verre par exemple.

L'extrusion est réalisée conformément à diverses techniques bien connues en soi.

En sortie de filière , on procède à la coagulation du produit extrudé par un contact partiel ou total du produit extrudé avec un liquide coagulant (étape c).

La coagulation d'un produit extrudé en forme de membrane plane est réalisée généralement par immersion de ce produit dans un bain de liquide coagulant ou par balayage et arrosage d'une ou des parois du produit extrudé avec le liquide coagulant.

Lorsque le produit extrudé est conformé en fibre creuse, on réalise en pratique la coagulation de la surface interne de la fibre creuse en cours de formation en introduisant le liquide coagulant par l'orifice axial de la filière. On peut également effectuer la coagulation externe de la fibre creuse en voie de formation en la faisant circuler dans un bain de liquide coagulant. Ou encore, on peut réaliser la coagulation interne et externe de la fibre creuse en la soumettant quasiment simultanément à une immersion dans un bain de liquide coagulant et en faisant circuler un liquide coagulant, dans son conduit axial, ou en décalant dans le temps ces deux opérations de coagulation.

L'opération de coagulation constitue l'une des étapes déterminantes pour l'obtention d'une membrane conforme à l'invention. Cette opération contribue en effet, d'une part à la formation d'une couche de séparation et d'autre part, à l'enrichissement superficiel de cette couche en copolymère.

Par ailleurs, la dimension moyenne des pores est fonction notamment de la nature physico-chimique du liquide coagulant. Ainsi, la dimension moyenne des pores sera d'autant plus faible que le liquide coagulant sera plus précipitant, et inversement.

En conséquence, le choix du liquide coagulant est adapté selon l'application envisagée. Aussi, pour la fabrication d'une membrane de plasmaphérèse, on choisit un liquide coagulant présentant des propriétés de précipitation modérées et vérifiant les conditions énoncées dans l'étape (c). A titre d'exemple, on peut citer des mélanges à base d'eau et d'au moins un solvant polaire tel que la N-méthylpyrrolidone, le glycérol ou des alcools, par exemple le méthanol, l'éthanol, les propanols et les butanols.

Pour la fabrication d'une membrane d'hémodialyse, on choisit de préférence un liquide coagulant présentant des propriétés de précipitation élevées et vérifiant les conditions de l'étape (c). Dans ce cas, conviennent l'eau, des mélanges contenant au moins 50 % d'eau et comprenant également un ou plusieurs solvants organiques tels que ceux précités. On peut également utiliser des solutions aqueuses de sel minéral avec comme sel minéral un sel soluble dans l'eau de métal alcalin ou alcalinoterreux.

Avantageusement, on utilise comme liquide coagulant des mélanges contenant au moins 50 % d'eau et de préférence encore, de l'eau uniquement. C'est en effet dans ces conditions que de forts taux d'enrichissement en copolymère ont été obtenus.

Lors de la coagulation, les liquides (solvants et non solvants) contenus dans le produit extrudé sont dissous par le liquide coagulant qui, en conséquence, est dilué progressivement et de ce fait voit ses propriétés de coagulant de moins en moins marquées. La dilution du liquide coagulant est plus importante quand elle se produit dans le canal interne d'un produit extrudé en forme de fibre creuse au cours de la coagulation de sa paroi interne. Aussi, afin de bénéficier d'un liquide coagulant qui conserve le plus longtemps possible ses propriétés précipitantes, et donc pour favoriser encore l'enrichissement superficiel en copolymère, on utilise de préférence des débits de liquide coagulant élevés.

De préférence encore, on choisit une vitesse d'extrusion relativement lente, ou en d'autres termes un débit de solution Qc relativement faible. On a, en effet, trouvé que l'enrichissement de la couche de séparation en copolymère est également favorisé quand la vitesse d'extrusion est relativement lente. De préférence, on utilise une vitesse d'extrusion au plus égale à 20 m/min de solution. Par vitesse d'extrusion, on entend la vitesse de sortie de la filière.

De préférence encore, on utilise une vitesse d'extrusion relativement lente et un débit de liquide coagulant plutôt élevé.

Dès que la membrane selon l'invention a atteint un état de solidification suffisant lui permettant d'être sollicitée mécaniquement tout en conservant sa forme, elle est généralement prise en charge par un système mécanique comprenant notamment un ou plusieurs rouleaux entraîneurs.

Eventuellement, la membrane obtenue est soumise ensuite à une opération d'étirage soit dans le but d'ajuster sa porosité et, par voie de conséquence, sa perméabilité, soit généralement pour augmenter la productivité. Toutefois, un tel étirage n'est pas indispensable à l'obtention d'une membrane conforme à l'invention.

Ensuite, afin d'éliminer l'essentiel des constituants non polymériques présents dans la membrane (solvants et non solvants), on soumet la membrane à un lavage en la faisant circuler dans un ou plusieurs bains de lavage successifs. Comme bain de lavage, on peut utiliser des mélanges aqueux de solvants organiques, notamment d'alcools tels que le méthanol. De préférence, on utilise de l'eau pure. La membrane lavée peut ensuite être séchée conformément à des techniques connues.

Selon une variante de réalisation de l'invention, la solution de l'étape a) est obtenue par mélange :

* d'une première solution constituée de :
  - au moins un polymère hydrophobe,
  - au moins un solvant organique du polymère hydrophobe et du copolymère dont la température d'ébullition est supérieure à la température de mise en oeuvre de la solution,
  - et éventuellement au moins un non solvant du polymère hydrophobe, miscible avec le solvant organique,
* et d'une seconde solution constituée de :
  - au moins un copolymère insoluble dans l'eau, à base d'acrylonitrile, d'au moins un monomère oléfiniquement insaturé, ionique ou ionisable, et éventuellement d'au moins un troisième monomère oléfiniquement insaturé, non ionique et non ionisable,
  - au moins un solvant organique du copolymère et du polymère hydrophobe dont la température d'ébullition est supérieure à la température de mise en oeuvre de la solution, et qui est avantageusement identique à celui utilisé dans la première solution,
  - et éventuellement au moins un non solvant du polymère hydrophobe, éventuellement non solvant du copolymère, miscible avec le solvant organique et qui est avantageusement identique à celui utilisé dans la première solution,

  étant entendu que l'une au moins de ces solutions doit comprendre au moins un non solvant du polymère hydrophobe tel que défini ci-dessus.

Les conditions opératoires et les modes de mise en oeuvre énoncés ci-dessus dans le cadre de la première variante du procédé de préparation de la membrane selon l'invention restent valables pour cette variante de réalisation.

Un tel procédé permet de mettre en oeuvre des solutions plus concentrées qui sont thermodynamiquement plus instables que celles mises en oeuvre dans le cadre de la première variante. Egalement, avec un tel procédé, on peut travailler avec des vitesses d'extrusion plus élevées que celles utilisées pour la première variante.

D'autres procédés de préparation d'une membrane conforme à l'invention peuvent être envisagés.

Les membranes selon l'invention sont avantageusement utilisées en hémodialyse et/ou en ultrafiltration, ou en plasmaphérèse.

Les exemples qui suivent sont donnés à titre illustratif et non limitatif de la présente invention et montrent comment elle peut être mise en pratique.

Les protocoles opératoires utilisés pour caractériser les membranes exemplifiées sont les suivants :

Composition chimique superficielle de la couche de séparation

Elle est déterminée par spectroscopie de photo-électrons (ESCA). On examine une zone de surface d'environ 150 x 150 $\mu m^2$. La profondeur d'investigation est d'environ 50 à 100 Angstroms dans les conditions générales d'analyse.

Cs représente la concentration moyenne en copolymère dans la couche superficielle ainsi analysée.

En outre, dans le cas d'une analyse ESCA en distribution angulaire, il est possible généralement de définir par extrapolation la concentration en copolymère dans une couche superficielle de très faible épaisseur, c'est-à-dire moins de 10 Angstroms. On désigne par Ces, concentration en copolymère à l'extrême surface, la valeur ainsi déterminée. Cm représente la concentration massique moyenne en copolymère dans la membrane. Dans les exemples, Cs, Ces et Cm sont exprimées en pourcentages pondéraux.

Mouillabilité

La mouillabilité de la membrane est définie par l'angle de raccordement $\theta$ du liquide sur la membrane. Sur une surface plane, elle est déterminée classiquement par le dépôt de gouttelettes du liquide à partir desquelles on mesure $\theta$.

Dans le cas de fibre creuse, l'appréciation de la mouillabilité de la paroi interne peut être réalisée par la mesure de la hauteur de l'ascension capillaire x

$$x = 2\gamma \cos\theta / \rho g r$$

g accélération de la pesanteur
$\gamma$ tension superficielle du liquide
$\rho$ densité du liquide
r rayon interne de la fibre

Toutefois, l'existence d'une porosité de paroi fait que l'ascension du liquide dans le conduit interne de la fibre s'effectue d'une manière progressive.

En pratique, x est mesuré 5 minutes après la mise en contact du liquide, cette valeur étant proche de la valeur à l'équilibre après plusieurs heures.

On définit ainsi un indice de mouillabilité IM tel que IM = cos $\theta$, cos $\theta$ étant calculé au moyen de la relation indiquée ci-dessus.

IM est un bon indicateur de la mouillabilité de la paroi interne de la fibre. En effet, on vérifie que dans le cas d'une membrane sous forme de fibre creuse constituée d'un polymère hydrophobe tel que du polyfluorure de vinylidène ou de la polyéthersulfone, IM est compris entre 0 et 0,2 et que dans le cas d'une membrane sous forme de fibre creuse constituée d'un polymère mouillable par l'eau tel qu'un copolymère d'acrylonitrile et de méthallylsulfonate de sodium, IM est compris entre 0,8 et 1.

Caractéristiques mécaniques

Par des essais de traction au moyen d'un dynamomètre sur fibre unitaire, on détermine les caractéristiques élastiques : module d'YOUNG E, et de rupture : contrainte nominale $\tau$ R, allongement $\Sigma$ R. Pour chaque échantillon, on teste 10 éprouvettes dans les conditions suivantes :

température : 23°C ;
longueur utile (entre mors) : 10 cm ;
vitesse de traction : 0,5 cm/mn.

On détermine une valeur moyenne sur les 10 valeurs mesurées.

Stabilité dimensionnelle

On détermine la variation dimensionnelle de l'état sec à l'état humide résultant d'une immersion dans l'eau à 40°C pendant au moins 24 heures sur une membrane non maintenue.

Soit

$L_o$ la longueur de l'échantillon à l'état sec
L la longueur de l'échantillon à l'état humide

On exprime $\Delta$ L (en pourcentage) = $\frac{L - L_o}{L_o} \times 100$

On notera que les $\Delta$ L obtenus sont toujours positifs. Les membranes selon l'invention ne présentent en effet pas de phénomène de retrait dans les conditions de cette mesure.

Perméabilité hydraulique

Elle est obtenue par la mesure du temps t de filtration d'un volume V de solution de NaCl à 9g/l à une pression transmembranaire moyenne P de l'ordre de 0,5 atm au travers d'une surface S de membrane. Cette perméabilité est définie par le coefficient d'ultrafiltration (Kuf) exprimé en $ml/h.m^2.mmHg$ :

Soit Kuf = V/t.P.S

Perméabilité diffusive

Elle est déterminée à partir de la mesure de résistance au transfert de solutés en solution entre le compartiment solution et le compartiment solvant séparés par la membrane en opérant à co-courant et à isopression.

La perméabilité diffusive, exprimée en cm/min, est mesurée pour les solutés urée Masse moléculaire 60) et vitamine B12 (Masse moléculaire 1355).

Taux de rejet : TR

Il est défini à partir de la transmittance T :

TR (exprimé en pourcentage) = (1 - T) x 100

La transmittance représente la fraction de molécules qui passe par convection à travers les pores de la membrane.

On détermine le taux de rejet de la membrane vis à vis :

- d'une solution aqueuse de bovalbumine à 5 g/l en présence de NaCl (9 g/l) (Masse moléculaire de l'ordre de 67000)

La pression transmembranaire est ajustée de manière à obtenir un débit d'ultrafiltration, exprimé en $cm^3/s$, constant par unité de surface membranaire et égal à $10^{-4}$ $cm^3/s.cm^2$.

Toxicité

Test de cytotoxicité

La cytotoxicité des éluats a été évaluée qualitativement sur cellules MRC 5 (fibroblastes pulmonaires d'origine humaine).
Les membranes selon l'invention sont immergées dans l'eau à 70°C pendant 24 heures selon la norme DIN 58 352 partie 3.
Les éluats sont mis en contact avec une couche confluente de cellules MRC5.

Après incubation à 37°C pendant 6 jours, la cytotoxicité est évaluée qualitativement par observation microscopique de l'aspect des cellules. Une échelle de 0 à 4 X est utilisée pour l'évaluation. Parmi les membranes selon l'invention, aucune n'a été trouvée cytotoxique.

Test d'hémolyse

Les conditions expérimentales utilisées sont celles décrites dans la norme DIN 58 361 partie 4. Conformément à cette norme, le test a été effectué sur du sang humain. Les éluats des membranes testées n'ont pas provoqué d'hémolyse.

Biocompatibilité

La biocompatibilité des membranes vis à vis du sang a été évaluée grâce à un test ex-vivo dans les conditions de dialyse à la différence que le sang n'est pas restitué au volontaire.
Le test ex-vivo est réalisé pendant 30 minutes avec dosage toutes les 5 minutes (T0 à T30) de la βTG, du FPA, du C3a et de la PMN Elastase. Un contrôle Tc est effectué avant le branchement du dialyseur.

Les conditions hémodynamiques retenues pour évaluer la biocompatibilité des membranes sont celles correspondant à des séances cliniques sur AN 69 avec un taux de cisaillement de 360 $s^{-1}$. Seule la membrane polysulfone (PS) commercialisée sous la dénomination FPS 600 par FRESENIUS a été testée avec un taux de cisaillement de 613 $s^{-1}$.

Afin de différencier, comparer et évaluer les membranes en fonction de leur composition spécifique, les tests ex-vivo ont été réalisés en prenant en compte la sensibilité à l'héparine des volontaires et leur hématocrite à l'instant du test, ceci afin de déterminer des conditions d'héparination limite, avec un temps de coagulation (TCA pour Temps de Céphaline Activée) stable au cours du test de 30 minutes. Plus précisément, les tests ex-vivo ont été réalisés à un même niveau d'hypocoagulation pour tous les volontaires, niveau obtenu en doublant le TCA initial.

Les résultats obtenus sont donnés en comparaison avec ceux obtenus sur des membranes témoins dans les mêmes conditions opératoires.

Les membranes témoins sont :

- la membrane polysulfone haut flux commercialisée sous la dénomination FPS 600 par FRESENIUS et ci-après désignée par "PS",
- la membrane commercialisée par ENKA sous la dénomination "CUPROPHAN" et ci-après désignée par "CUP",
- la membrane de HOSPAL objet du brevet français 2 529 464. Cette membrane est à base de copolymère d'acrylonitrile et de méthallylsulfonate de sodium et connue sous la dénomination "AN 69".

La βthromboglobuline (βTG) est dosée par la méthode immuno enzymatique à l'aide du kit de dosage commercialisé sous la dénomination "ASSERACHROM$^R$ βTG" (référence 0419) par DIAGNOSTICA STAGO.

Le FPA est dosé par la méthode immuno-enzymatique à l'aide du kit de dosage commercialisé sous la dénomination "ASSERACHROM$^R$ FPA" (référence 0411) par DIAGNOSTICA STAGO.

La protéine C3A activée du complément est dosée par la méthode dite de "radio-immuno-assay" à l'aide du kit de dosage commercialisé sous la dénomination "HUMAN COMPLEMENT C3A des Arg (125) Assay System" (référence RPA.518) par AMERSHAM.

La protéinase PMN élastase, libérée par les leucocytes, est dosée par la méthode dite "d'immuno-assay colorimétrique" à l'aide du kit de dosage PMN Elastase (ref. 12589) commercialisé par MERCK.

Dans les exemples 1 à 16 :

Les polymères A hydrophobes utilisés dans les exemples décrits sont des polyfluorures de vinylidène (PVDF) des polysulfones (PSF) et des polyéthersulfones (PES).

Les PVDF sont commercialisés sous la marque KYNAR par la société PENWALT CORPORATION.

Les PSF sont commercialisés sous la marque UDEL par la société AMOCO CHEMICALS.

Les PES sont commercialisés sous la marque VICTREX par la Société IMPERIAL CHEMICAL INDUSTRIES.

Le polymère B utilisé dans les exemples 1 à 15 est un copolymère d'acrylonitrile (AN) et de méthallylsulfonate de sodium (MAS) dont les proportions molaires sont AN/MAS 96,7/3,3 (reference : AN 69). Sa capacité ionique est de 580 meq/kg.

Le polymère B utilisé dans l'exemple 16 est un copolymère d'acrylonitrile (AN) et de méthallylsulfonate de sodium (MAS) dont les proportions molaires sont AN/MAS 92,7/7,3 (référence PAA 1200). Sa capacité ionique est de 1200 meq/kg.

Les valeurs de masse moléculaire moyenne en nombre (Mn) et en poids (Mw) des polymères utilisés sont indiquées dans le tableau 1 ci-après :

TABLEAU 1

| Nature du polymère | Référence | Mn en dalton | Mw en dalton |
|---|---|---|---|
| PVDF | KYNAR 301F | 60 000 | 350 000 |
| PVDF | KYNAR 710 | 55 000 | 160 000 |
| PSF | UDEL P 1700 | 22 000 | 71 000 |
| PES | VICTREX 4800G | 31 000 | 77 000 |
| AN/MAS | AN 69 | 100 000 | 250 000 |
| AN/MAS | PAA 1200 | 120 000 | 300 000 |

Les compositions de la solution et du liquide de coagulation mis en oeuvre dans les exemples 1 à 16 figurent dans le tableau 2 ci-après.

Le solvant organique entrant dans la composition du liquide de coagulation est de la N-méthyl 2 pyrrolidone (NMP) à l'exception de l'exemple 10 où il s'agit de diméthylsulfoxide (DMSO), et des exemples 15 et 16 où il s'agit d'Isopropanol (IP).

TABLEAU 2

| Exemple | Nature du Polymère A | Composition de la solution % en poids | | | | | Composition du liquide de coagulation % en poids | |
|---|---|---|---|---|---|---|---|---|
| | | A | B | eau | glycerol | NMP | eau | solvant organique |
| 1 | KYNAR 301F | 19.8 | 2.2 | 5 | 5 | 68 | 100 | 0 |
| 2 | " " | 22.5 | 2.5 | 10 | 0 | 65 | 50 | 50 |
| 3 | UDEL P 1700 | 26.6 | 1.4 | 3.5 | 3.5 | 65 | 100 | 0 |
| 4a | KYNAR 301F | 18.8 | 2.2 | 0 | 0 | 79 | 75 | 25 |
| 4b | " " | 18 | 2 | 4 | 0 | 76 | 75 | 25 |
| 5 | " " | 25.2 | 2.8 | 5 | 5 | 62 | 50 | 50 |
| 6 | KYNAR 710 | 20.9 | 1.1 | 5 | 5 | 68 | 100 | 0 |
| 7a | KYNAR 301F | 20.9 | 1.1 | 5 | 5 | 68 | 100 | 0 |
| 7b | " " | 19.8 | 2.2 | 5 | 5 | 68 | 100 | 0 |
| 7c | " " | 17.6 | 4.4 | 3.5 | 3.5 | 71 | 100 | 0 |
| 8 | UDEL P 1700 | 19.8 | 2.2 | 3.5 | 3.5 | 71 | 100 | 0 |
| 9 | KYNAR 301F | 22.5 | 2.5 | 5 | 5 | 65 | 50 | 50 |
| 10a,b,c | UDEL P 1700 | 23.75 | 1.25 | 3.5 | 3.5 | 68 | 50-100 | 50-0 |
| 11a,b,c,d | KYNAR 301F | 20.9 | 1.1 | 5 | 5 | 68 | 100 | 0 |
| 12a,b,c | " " | 19.8 | 2.2 | 5 | 5 | 68 | 100 | 0 |
| 13a,b,c | UDEL P 1700 | 23.75 | 1.25 | 3.5 | 3.5 | 68 | 100 | 0 |
| 14 | VICTREX 4800G | 25.2 | 2.8 | 3.5 | 3.5 | 65 | 50 | 50 |
| 15 | " " | 25.2 | 2.8 | 3.5 | 3.5 | 65 | 50 | 50 |
| 16 | VICTREX 4800G | 22.5 | 2.5 | 3.5 | 3.5 | 68 | 50 | 50 |

Exemple 1 :

Cet exemple décrit la réalisation et les propriétés d'une membrane PVDF/AN69 selon l'invention.

On charge dans un réacteur sous agitation les polymères, le solvant et le non solvant, dans les proportions suivantes :

19,8 % de KYNAR 301F
2,2 % d'AN69
5 % d'eau
5 % de glycérol
68 % de NMP.

Puis on élève la température à la valeur T1 = 100°C et on la maintient pendant 4 heures.
La solution de polymères obtenue est filtrée et ensuite conservée à une température T2 = 60°C qui est la température de filage.
La viscosité de la solution est de 10 Pascal.seconde (Pa·s) à 60°C.

Lors de l'opération de filage, la solution de polymères est introduite dans une trémie thermorégulée à la température T2.
On alimente au moyen d'une pompe une filière à fente annulaire de diamètre externe DE = 535 μm, de diamètre interne DI = 350 μm. Par l'orifice axial de la filière de diamètre D = 185 μm, on injecte le liquide de coagulation qui est de l'eau.

Le débit QC de solution de polymère est de 0,74 ml /min.
Le débit QL de liquide coagulant est de 1,48 ml /min.

En sortie de filière, la fibre naissante parcourt une distance L de 90 cm dans l'air ambiant avant d'entrer dans un bain de coagulation externe qui est de l'eau. La vitesse de filage VF est de l'ordre de 11 m/min.
La fibre est ensuite guidée à l'aide de galets et entraînée vers un bac de lavage à l'eau avant d'être réceptionnée sur bobine. Le séchage s'effectue ensuite à température ambiante.
A l'issue de ces opérations, la teneur en solvant organique résiduel est inférieure à 0,01 %.
La fibre ainsi obtenue présente une structure à peau interne et à doigts de gant qui s'élargissent depuis la paroi interne jusqu'à la surface externe.
Son diamètre interne (di) est de 218 μm et son diamètre externe (de) est de 346 μm.

On détermine les caractéristiques suivantes :
- indice de mouillabilité IM = 0,54
- concentration moyenne en AN69 dans la couche superficielle de la paroi interne Cs = 25 %
- perméabilité hydraulique Kuf = 330 ml/h.m$^2$. mmHg.
- perméabilité diffusive

à l'urée : 0,11 cm/min
à la vitamine B 12 : 0,02 cm/min

- taux de rejet à la bovalbumine TR = 93 %.
- caractéristiques mécaniques E = 130 MPa ; τ R = 3.8 MPa ; Σ R = 91 %.

De par la valeur relativement élevée de l'indice de mouillabilité et de la concentration moyenne en polymère AN69 dans la couche superficielle (2,5 fois supérieure à la concentration massique Cm qui est de 10 %) on démontre l'effet d'enrichissement en surface en copolymère d'acrylonitrile recherché.

La concentration moyenne Cs de 25 % est en fait inférieure à la teneur en AN69 à l'extrême surface pour les raisons mentionnées précédemment concernant le mode d'analyse et exemplifiées dans l'exemple 2 suivant. En effet, l'analyse ESCA en variation angulaire conduit à une Ces = 32 %.

Ces caractéristiques peuvent expliquer que la fibre obtenue, étant mouillée spontanément par l'eau, donne lieu à un transfert convectif et diffusif sans qu'il soit nécessaire de procéder à un traitement préalable par un milieu liquide mouillant tel que des mélanges eau-alcool ou des solutions aqueuses de surfactants.

Le copolymère d'acrylonitrile utilisé n'étant pas hydrosoluble, les propriétés membranaires n'évoluent pas sensiblement au cours de l'emploi de la fibre en présence de milieux aqueux.

En outre, cette membrane présente une bonne stabilité dimensionnelle, (la variation dimensionnelle dans les conditions précitées est inférieure à 0,6 %), ainsi que de bonnes caractéristiques mécaniques.

Pour les exemples 2 à 16 décrits ci-après, le protocole opératoire est celui décrit dans l'exemple 1. Seules les conditions spécifiques différant de l'exemple 1 sont indiquées.

Exemple 2

Cet exemple montre l'existence d'un gradient de concentration en copolymère d'acrylonitrile dans la couche superficielle de la membrane selon l'invention.

On élabore une fibre creuse selon le protocole opératoire de l'exemple 1 avec les conditions particulières suivantes :
T1 = 120°C ; T2 = 120°C ; L = 30 cm.

Cette fibre creuse a une perméabilité hydraulique de 460 ml/h.m$^2$.mmHg et un indice de mouillabilité de 0,45.

On procède à une analyse ESCA de la paroi interne de la fibre dans les conditions particulières de variation de l'angle d'analyse.
Le libre parcours moyen des électrons dans la matière étant imparfaitement connu, on ne dispose que d'une estimation de la profondeur d'analyse.

Cette analyse fournit les résultats suivants :

| Angle | Ordre de grandeur de la profondeur analysée en Angströms | Concentration superficielle en AN69 : Cs |
|---|---|---|
| 90° | 100 | 26,5 |
| 35° | 60 | 31 |
| 5° | 10 | 35 |

On constate qu'il existe un gradient de concentration en copolymère d'acrylonitrile dans la couche superficielle, la teneur étant d'autant plus élevée que la couche est de faible épaisseur (l'épaisseur est comptée depuis la surface).
Par extrapolation à épaisseur quasiment nulle on détermine que la concentration à l'extrême surface Ces est d'environ 36 %.

Exemple 3

Cet exemple montre l'existence d'un enrichissement en copolymère d'acrylonitrile de la paroi interne d'une fibre creuse PSF/AN69 selon l'invention.

La viscosité de la solution de polymères est de 13 Pa·s à 60°C.

Les conditions opératoires de filage utilisées sont celles de l'exemple 1, à l'exception des conditions particulières suivantes :

Les débits de solution et de liquide interne sont respectivement de QC : 0,64 ml/min et QL : 1,12 ml/min.

La fibre ainsi obtenue est de type asymétrique avec une structure alvéolaire à peau sur la paroi interne.

Les caractéristiques sont les suivantes :
di : 250 µm ; de : 335 µm
Kuf : 76 ml/$m^2$.h.mmHg
IM : 0,48
Cs : 33 %

On observe également un effet d'enrichissement en copolymère d'acrylonitrile dans la couche superficielle, le rapport Cs /Cm de cette fibre étant de 6,6 (Cm correspond à la concentration massique moyenne en copolymère dans la fibre).

Il en résulte, comme pour la fibre de l'exemple 1, une mouillabilité spontanée et durable de la fibre par l'eau.

Egalement, la fibre selon cet exemple présente une bonne stabilité dimensionnelle (la variation dimensionnelle est inférieure à 0,2 %) ainsi que de bonnes caractéristiques mécaniques.

Exemple 4

Cet exemple montre l'effet de l'ajout de non solvant dans la solution de polymère.

On élabore deux fibres creuses à partir respectivement des solutions 4a et 4b.
La solution 4a, sans non solvant, est opalescente.
La solution 4b, contenant 4 % d'eau, est franchement louche.
Ces deux solutions sont filées selon le mode opératoire de l'exemple 1 avec :
T2 : 25°C ; L = 10 cm.

Les caractéristiques superficielles suivantes de ces fibres sont les suivantes :
. Fibre 4a IM = 0,2
. Fibre 4b IM = 0,59

On constate que la présence de non solvant dans la solution a un effet favorable sur l'enrichissement de surface (fibre 4b). A l'inverse, en l'absence de non solvant conduisant à une solution plus homogène, l'enrichissement est beaucoup plus faible et la membrane obtenue présente une mouillabilité insuffisante.

Exemple 5

Cet exemple montre l'utilisation d'une solution plus concentrée de polymère pour l'élaboration d'une fibre

PVDF/AN69.
Avec une concentration en polymère de 28 %, la solution est particulièrement louche.

Les conditions particulières de filage utilisées sont :
T1 = 110°C ; T2 : 105°C ; L = 40 cm.

Les caractéristiques de la fibre obtenue sont :
Kuf = 110 ml/h.m$^2$.mmHg
IM = 0,51.

La membrane obtenue présente une bonne stabilité dimensionnelle ainsi que de bonnes caractéristiques mécaniques.

Exemple 6

Cet exemple montre l'utilisation d'un polymère PVDF de plus faible masse moléculaire que le KYNAR 301F.

La mise en oeuvre du KYNAR 710 conduit à fixer les paramètres de filage à :
T2 : 90°C ; L = 40 cm.

Les caractéristiques de la fibre obtenue sont les suivantes :
. di = 252 µm ; de = 400 µm
. IM = 0,57
. Cs = 10 %
. Kuf = 31 ml/h.m$^2$.mmHg
. TR = 97 %

Bien que le degré d'enrichissement apparent Cs /Cm ne soit que de 2, la valeur élevée de l'indice de mouillabilité indique que la valeur de Cs à l'extrême surface de la fibre est nettement supérieure.
En outre, la fibre obtenue présente de bonnes caractéristiques mécaniques ainsi qu'une bonne stabilité dimensionnelle.

Exemple 7

Cet exemple montre la réalisation de fibres selon l'invention avec différentes proportions de polymère PVDF et de copolymère AN69.

Les conditions opératoires sont celles de l'exemple 1. Les propriétés des fibres de teneur pondérale (Cm) en AN69 5, 10 et 20 % sont indiquées dans le tableau 3.

TABLEAU 3

| Fibre | PVDF/AN69 | di µm | de µm | Cs % | Ces % | IM | Kuf ml/hm²mmHg | TR % | L % |
|---|---|---|---|---|---|---|---|---|---|
| 7a | 95/5 | 270 | 384 | 11 | 34 | 0,62 | 233 | 78 | 0,3 |
| 7b | 90/10 | 218 | 346 | 25 | 32 | 0,54 | 330 | 93 | 0,6 |
| 7c | 80/20 | 218 | 330 | 32 | 38 | 0,45 | 337 | 97 | 1,3 |

Les fibres décrites présentent des caractéristiques de surface, de perméabilité, ainsi que de stabilité dimensionnelle quand elles passent de l'état sec à l'état humide, qui sont adaptées à l'hémodialyse.

Les résultats des tests d'évaluation de la biocompatibilité des fibres 7a (95/5) et 7c (80/20) sont reportés dans les tableaux 4, 5, 6 et 7 suivants.

TABLEAU 4

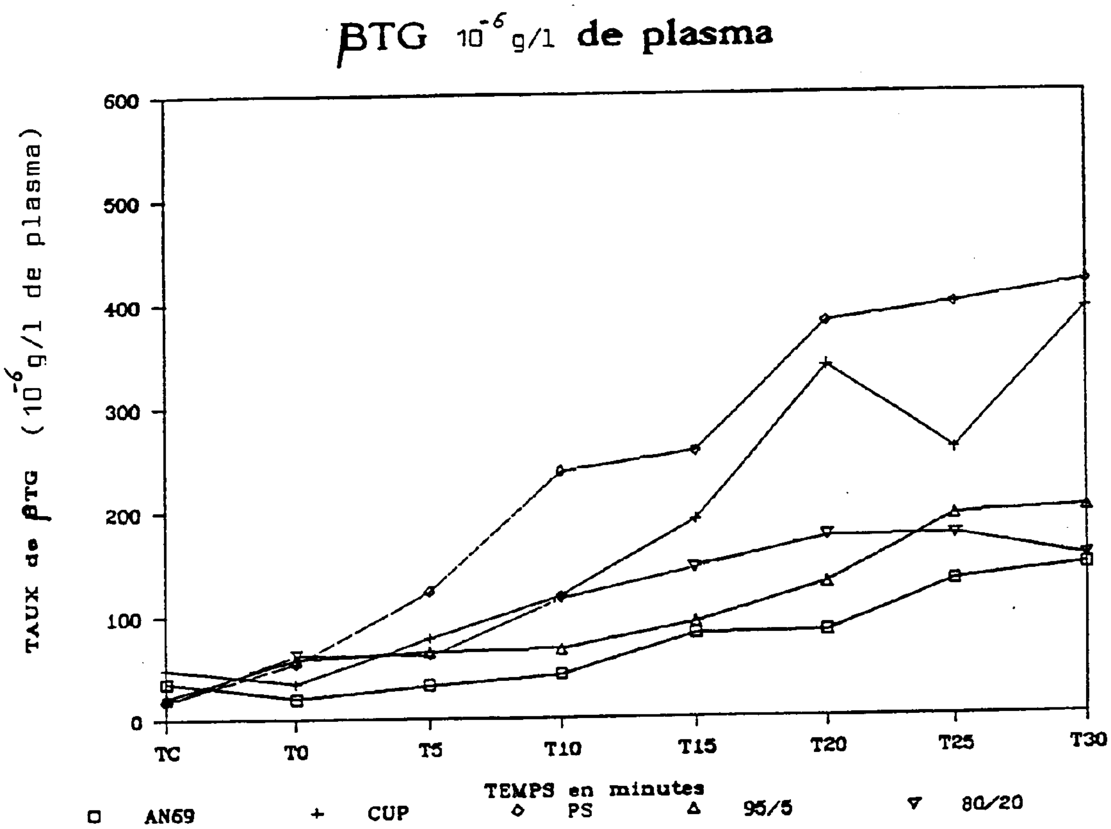


Les taux de βTG observés avec les deux fibres 7a (95/5) et 7c (80/20) sont du même ordre que ceux observés avec l'AN69. Ils se situent assez nettement en-dessous de ceux des dialyseurs cuprophan et polysulfone.

Les deux fibres 7a et 7c ont un bon comportement, très proche de l'AN69 : en effet, elles induisent peu d'activation des plaquettes mesurable par un relargage de βTG.

TABLEAU 5

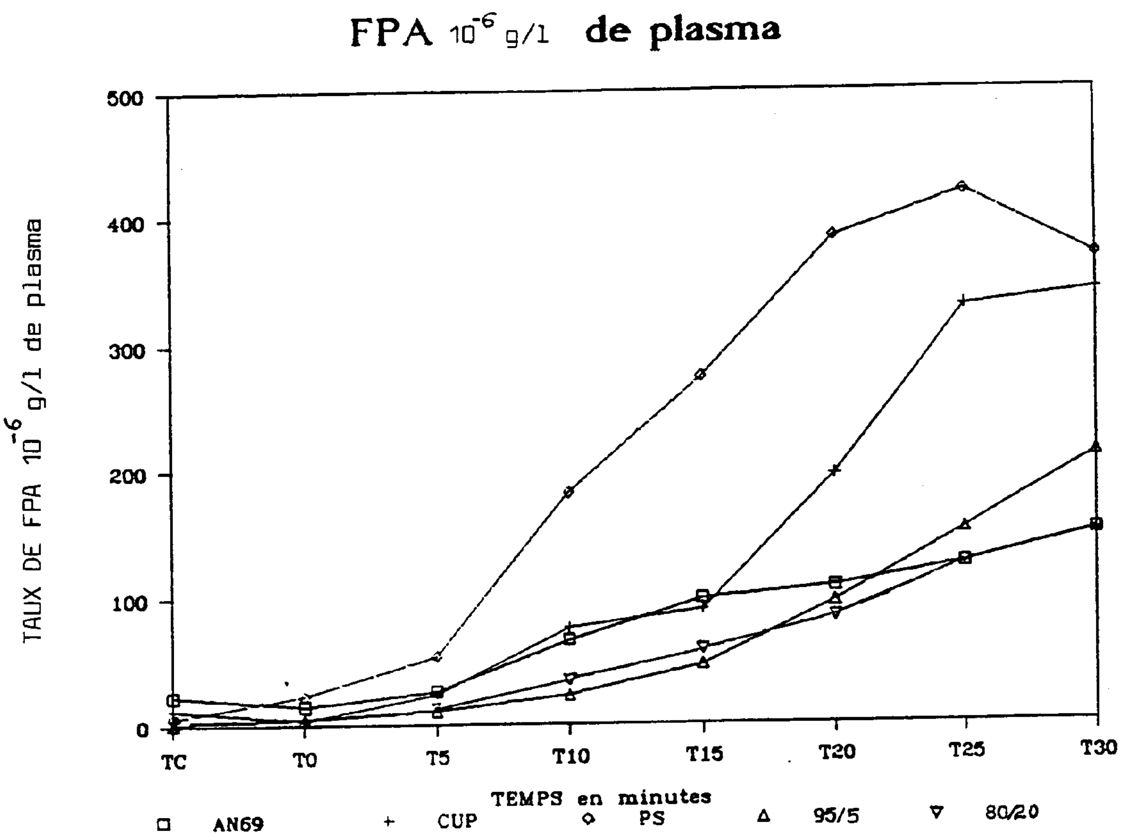


Le comportement des fibres 7a (95/5) et 7c (80/20) est bon puisque le niveau de FPA atteint est faible et correspond à celui de l'AN69 et est en-dessous de celui de la Cuprophan et de la polysulfone.

TABLEAU 6

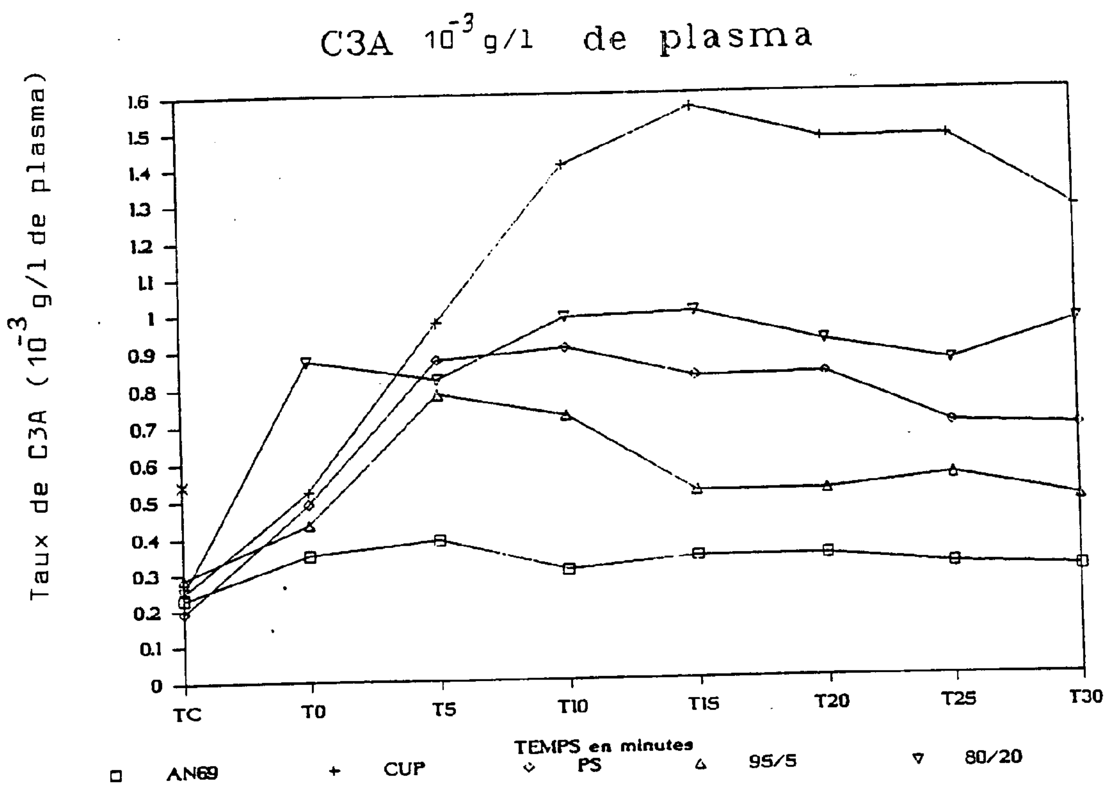


Les deux fibres 7a (95/5) et 7c (80/20) activent modérément le système du complément.
La fibre 95/5 se trouve dans une position intermédiaire entre l'AN69 et la polysulfone.
La fibre 80/20 s'écarte davantage des performances de l'AN69, le taux de génération de C3 a étant légèrement supérieur à la polysulfone.

TABLEAU 7

PMN ELASTASE $10^{-6}$ g/lde plasma

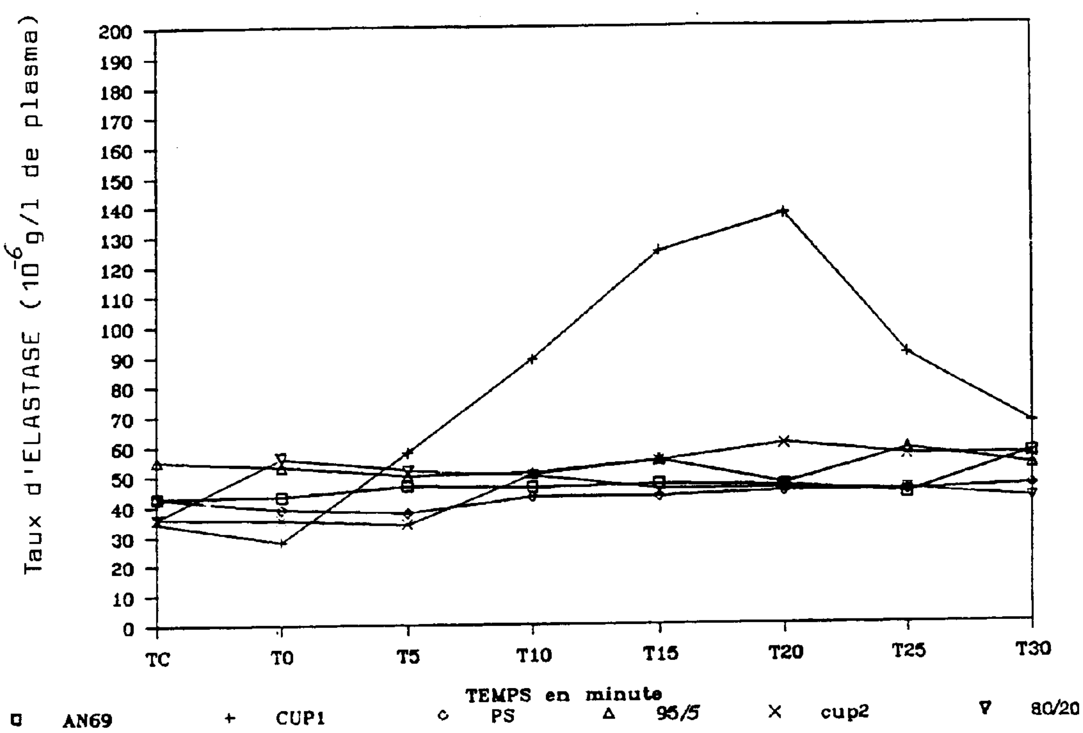


Les deux fibres 7a (95/5) et 7c (80/20) ne se démarquent pas des matériaux comme la polysulfone et l'AN69 et n'induisent pas d'activation de leucocytes mesurables par le relargage de PMN élastase.
Seule la Cuprophan provoque la libération de PMN élastase lors de certains essais.

## Exemple 8

Cet exemple décrit une fibre PSF/AN69 90/10 selon l'invention. Les conditions opératoires sont celles de l'exemple 3 à la différence de la concentration en polymère dans la solution qui est de 22 % en poids. La solution, du fait de l'incompatibilité des polymères constituants, est fortement louche.

Dans cet exemple, la fibre creuse élaborée a un indice de mouillabilité de 0,63 et une perméabilité hydraulique de 67 ml/h.m$^2$.mmHg, une bonne stabilité dimensionnelle (variation dimensionnelle inférieure à 0,3 %) et de bonnes caractéristiques mécaniques (E = 560 MPa ; $\tau$R = 12 Mpa ; $\Sigma$ R = 15 %).

## Exemple 9

Cet exemple montre la différence de composition entre la surface interne et la surface externe d'une fibre creuse selon l'invention.

La fibre est élaborée selon le protocole opératoire de l'exemple 1 avec les conditions particulières :
T1 = 120°C ; T2 = 120°C ; L = 40cm.

La détermination par analyse ESCA de la concentration superficielle en AN69 sur les deux faces de la membrane conduit à :

. Surface interne Cs = 28 %

. Surface externe Cs = 6,5 %

Par rapport à la concentration massique (CM) de 10 % en AN69, on constate un enrichissement au niveau

de la surface interne qui est l'effet recherché et un appauvrissement au niveau de la surface externe.

Exemple 10

Cet exemple montre l'incidence de la composition du fluide de coagulation.

On procède, dans les conditions opératoires de l'exemple 1, à l'élaboration de fibres creuses de composition PSF/AN69 95/5.

On fait varier la composition du liquide interne constitué d'eau et de diméthylsulfoxide (DMSO).

Cette variation a une incidence sur la valeur de l'indice de mouillabilité.

TABLEAU 9

| Fibre | Composition du liquide interne en % en poids DMSO | Composition du liquide interne en % en poids EAU | IM |
|---|---|---|---|
| 10a | 50 % | 50 % | 0,45 |
| 10b | 35 % | 65 % | 0,48 |
| 10c | - | 100 % | 0,59 |

L'accroissement d'IM engendré par une augmentation de la teneur en eau dans le fluide de coagulation indique un enrichissement plus important en copolymère d'acrylonitrile à l'extrême surface.

Exemple 11

Cet exemple montre l'incidence du débit de solution QC dans la filière annulaire sur les caractéristiques de fibres PVDF/AN 69 95/5.

On procède au filage de fibres creuses dans les conditions de l'exemple 1 excepté pour le débit de solution que l'on fait varier, le rapport QL /QC étant maintenu constant.

Les propriétés des fibres sont indiquées dans le tableau 10

TABLEAU 10

| Fibre | QC ml/min | di μm | de μm | IM | Kuf ml/h.m².mmHg |
|---|---|---|---|---|---|
| 11a | 0,64 | 269 | 373 | 0,62 | 233 |
| 11b | 0,74 | 299 | 414 | 0,50 | 181 |
| 11c | 0,87 | 308 | 438 | 0,48 | 215 |
| 11d | 1,07 | 305 | 460 | 0,44 | - |

La vitesse de filage étant maintenue constante, l'augmentation du débit QC entraîne une augmentation des dimensions de la fibre creuse ainsi qu'une diminution de l'indice de mouillabilité.

La recherche du meilleur degré possible d'enrichissement en copolymère d'acrylonitrile conduit à maintenir le débit de solution à un niveau suffisamment bas.

Exemple 12

Cet exemple montre l'incidence du débit du liquide de coagulation QL. On procède au filage de fibres creuses dans les conditions de l'exemple 1 excepté pour le débit QL de liquide de coagulation que l'on fait varier, le débit de la solution QC étant fixé à un niveau suffisamment bas.

Les propriétés des fibres sont indiquées dans le tableau 11 :

TABLEAU 11

| Fibre | QL ml/min | di µm | de µm | IM | Kuf ml/h.m².mmHg |
|---|---|---|---|---|---|
| 12a | 1,12 | 238 | 370 | 0,44 | 139 |
| 12b | 1,48 | 299 | 414 | 0,57 | 218 |
| 12c | 2,16 | 371 | 471 | 0,59 | 318 |

L'augmentation de QL apporte un meilleur enrichissement de surface en copolymère d'acrylonitrile (augmentation de IM).

Il faut en sortie filière un apport suffisant de liquide de coagulation pour que l'affinité du polymère AN69 vis à vis de ce milieu hydrophile engendre l'enrichissement superficiel recherché et aboutisse à une membrane conforme à l'invention.

Exemple 13

Cet exemple montre l'incidence du débit de la solution QC dans la filière annulaire sur les caractéristiques de fibres PSF/AN69 95/5.

On procède au filage de fibres creuses dans les conditions de l'exemple 1 excepté pour le débit de la solution que l'on fait varier, le rapport QL /QC étant maintenu constant.

Les caractéristiques mesurées sont reportées dans le tableau 12.

TABLEAU 12

| Fibre | QC ml/min | IM | Ces | Kuf ml/h.m².mmHg |
|---|---|---|---|---|
| 13a | 0,8 | 0,85 | 41 | 20 |
| 13b | 0,87 | 0,75 | 36 | 18 |
| 13c | 1,2 | 0,41 | 18 | 14 |

L'enrichissement superficiel en copolymère d'acrylonitrile est d'autant plus important que le débit de solution est faible.

Exemple 14

Cet exemple montre l'existence d'un enrichissement en copolymère d'acrylonitrile de la paroi interne d'une fibre creuse PES/AN 69 selon l'invention.

La viscosité de la solution de polymères est de 7,5 Pa·S à 60°C.

Les conditions opératoires de filage utilisées sont celles de l'exemple 1, à l'exception du débit QL de liquide coagulant qui est de 1,26 ml/mn.
La fibre ainsi obtenue est de type asymétrique avec une structure alvéolaire à peau sur la paroi interne. Son diamètre interne (di) est de 315 µm, son diamètre externe (de) de 403 µm.

On détermine les caractéristiques suivantes :

- indice de mouillabilité IM = 0,69
- concentration moyenne en AN 69 dans la couche superficielle de la paroi interne Cs = 29,5 %
- concentration en AN 69 à l'extrême surface de la paroi interne Ces = 37 %
- perméabilité hydraulique Kuf = 25 ml/h.m$^2$.mmHg
- taux de rejet à la bovalbumine TR = 95 %
- caractéristiques mécaniques E = 490 MPa ; $\tau$R = 11MPa ; $\Sigma$R = 27 %

Le phénomène d'enrichissement de surface en copolymère d'acrylonitrile correspond à une teneur de l'extrême surface 3,7 fois supérieure à la teneur massique. En outre, cette fibre a de bonnes caractéristiques mécaniques.

Exemple 15

On utilise les conditions opératoires de l'exemple 14 à l'exception de la nature du liquide coagulant interne, de son débit QL qui est de 1,12 ml/mn et de la vitesse de filage qui est de 15 m/mn.

On détermine les caractéristiques suivantes :

- di = 249 µm ; de = 329 µm
- indice de mouillabilité IM = 0.63
- concentration superficielle en copolymère Cs = 28.5 % et Ces = 36 %
- perméabilité hydraulique Kuf = 25 ml/h/m$^2$.mmHg
- taux de rejet à la bovalbumine TR = 97 %

On voit dans cet exemple que le remplacement du liquide coagulant eau/NMP (50/50) utilisé dans l'exemple 14 par un liquide coagulant eau/isopropanol (50/50) conduit également à une fibre creuse ayant les caractéristiques souhaitées.

Exemple 16

Comme polymère hydrophile, on utilise le copolymère d'acrylonitrile PAA 1200. Les conditions opératoires de filage sont celles de l'exemple 1. La fibre ainsi obtenue est de type asymétrique avec une structure alvéolaire à peau sur la paroi interne.
Son diamètre interne di = 260 µm
Son diamètre externe de = 343 µm.
On détermine les caractéristiques suivantes :

- indice de mouillabilité IM = 0,66
- perméabilité hydraulique Kuf = 60 ml/h.m$^2$.mmHg.

## Revendications

**1.** Membrane semi-perméable asymétrique comprenant une couche support et au moins une couche superficielle, dense ou mésoporeuse ou microporeuse dite couche de séparation, convenant pour le traitement des liquides biologiques, et caractérisée en ce que :

- la membrane est à base d'au moins un polymère hydrophobe et d'au moins un copolymère insoluble dans l'eau, ledit copolymère étant à base d'acrylonitrile, d'au moins un monomère sulfonique éventuellement salifié et éventuellement d'au moins un troisième monomère oléfiniquement insaturé, non ionique et non ionisable,
- la concentration superficielle en copolymère de la couche de séparation est supérieure à la concentration moyenne en copolymère dans la membrane,
- cette membrane, à l'état sec, est mouillable à l'eau,
- et les proportions respectives du copolymère et du polymère hydrophobe sont ajustées de sorte que la variation dimensionnelle de la membrane non maintenue n'excède pas + 3 % quand elle passe de l'état sec à l'état humide à 40°C.

**2.** Membrane selon la revendication 1, caractérisée en ce que la concentration superficielle en copolymère

à l'extrême surface de la couche de séparation est supérieure à 30 % en poids.

3. Membrane selon la revendication 1 ou 2, caractérisée en ce que la concentration moyenne en copolymère dans la membrane n'excède pas 40 % en poids.

4. Membrane selon l'une des revendications précédentes, caractérisée en ce que le polymère hydrophobe est choisi tel que, mis sous la forme d'une membrane semi-perméable, celle-ci présente une variation sur l'épaisseur ou la longueur n'excédant pas 0,5 % quand elle passe de l'état sec à l'état humide à 40°C.

5. Membrane selon l'une des revendications précédentes, caractérisée en ce que le polymère hydrophobe est une polyarylsulfone.

6. Membrane selon la revendication 5, caractérisée en ce que la polyarylsulfone est une polyéthersulfone.

7. Membrane selon l'une des revendications 1 à 4, caractérisée en ce que le polymère hydrophobe est un polyfluorure de vinylidène.

8. Membrane selon l'une des revendications 1 à 4, caractérisée en ce que le polymère hydrophobe est un polychlorure de vinyle.

9. Membrane selon l'une des revendications précédentes, caractérisée en ce que la proportion de monomère sulfonique éventuellement salifié dans le copolymère est comprise entre 1 et 50 % en nombre.

10. Membrane selon la revendication 9, caractérisée en ce que la proportion de monomère sulfonique éventuellement salifié dans le copolymère est comprise entre 3 et 15 % en nombre.

11. Membrane selon l'une des revendications précédentes, caractérisée en ce que le copolymère est à base d'acrylonitrile et de méthallylsulfonate de sodium.

12. Membrane selon la revendication 7, caractérisée en ce que le rapport massique de polyfluorure de vinylidène sur le copolymère est compris entre 70/30 et 99/1.

13. Membrane selon la revendication 5, caractérisée en ce que le rapport massique de polyarylsulfone sur le copolymère est compris entre 60/40 et 99/1.

14. Procédé de préparation d'une membrane selon l'une des revendications 1 à 13, caractérisée par les étapes suivantes :

a) préparation d'une solution constituée de :
- au moins un polymère hydrophobe,
- au moins un copolymère insoluble dans l'eau, ce copolymère étant à base d'acrylonitrile, d'au moins un monomère sulfonique éventuellement salifié et éventuellement d'au moins un troisième monomère, oléfiniquement insaturé, non ionique et non ionisable,

les proportions respectives du copolymère et du polymère hydrophobe étant ajustées de sorte que la variation dimensionnelle de la membrane n'excède pas + 3% quand elle passe de l'état sec à l'état humide à 40°C,
- au moins un solvant organique du polymère hydrophobe et du copolymère dont la température d'ébullition est supérieure à la température de mise en oeuvre de la solution,
- au moins un non solvant du polymère hydrophobe, éventuellement non solvant du copolymère, miscible avec le solvant organique.

les proportions respectives du polymère hydrophobe, du copolymère, du solvant organique et du non solvant étant ajustées afin que :
- la solution soit thermodynamiquement instable et louche mais néanmoins macroscopiquement homogène, et ne donne pas lieu à démixtion à la température de mise en oeuvre,
- un abaissement de la température de la solution provoquerait l'évolution spontanée de la solution vers un état de gel,

b) Extrusion de la solution ainsi obtenue au travers d'une filière,

c) Dès la sortie de la filière, l'extrusion est suivie d'une opération de coagulation par contact partiel ou total du produit extrudé avec un liquide coagulant, chimiquement inerte vis à vis du polymère hydrophobe et du copolymère, et avec lequel :
- le polymère hydrophobe a peu, voire pas d'affinité,

- le copolymère a de l'affinité sans y être soluble,

cette opération de coagulation étant effectuée pendant une durée suffisante pour obtenir la solidification du produit extrudé en membrane,
d) Puis lavage de la membrane obtenue,
e) Suivi éventuellement d'un séchage de la membrane.

**15.** Procédé selon la revendication 14, caractérisé en ce que la teneur en polymère hydrophobe et en copolymère dans la solution est comprise entre 10 et 30 % en poids.

**16.** Procédé selon la revendication 15, caractérisé en ce que la teneur en polymère hydrophobe et en copolymère dans la solution est comprise entre 20 et 28 % en poids.

**17.** Procédé selon l'une des revendications 14 à 16, caractérisé en ce que la teneur en non solvant dans la solution est comprise entre 2 et 20 % en poids.

**18.** Procédé selon l'une des revendications 14 à 17, caractérisé en ce que on utilise de l'eau à titre de non solvant.

**19.** Procédé selon l'une des revendications 14 à 17, caractérisé en ce que on utilise un mélange d'eau et de glycérine à titre de non solvant.

**20.** Procédé selon l'une des revendications 14 à 19, caractérisé en ce que le liquide coagulant contient de l'eau.

**21.** Procédé selon la revendication 20, caractérisé en ce que le liquide coagulant contient au moins 50 % en poids d'eau.

**22.** Procédé selon l'une des revendications 14 à 21, caractérisé en ce que la vitesse d'extrusion est au plus égale à 20 m/min.

**23.** Procédé selon l'une des revendications 14 à 22, caractérisé en ce que le débit de liquide coagulant est élevé afin qu'il conserve le plus longtems possible ses priorités précipitantes.

**24.** Procédé selon la revendication 14, caractérisé en ce que la solution de l'étape a) est obtenue par mélange :

* d'une première solution constituée de :
  - au moins un polymère hydrophobe,
  - au moins un solvant organique du polymère hydrophobe et du copolymère dont la température d'ébullition est supérieure à la température de mise en oeuvre de la solution,
  - et éventuellement au moins un non solvant du polymère hydrophobe, miscible avec le solvant organique,
* et d'une seconde solution constituée de :
  - au moins un copolymère insoluble dans l'eau, à base d'acrylonitrile, d'au moins un monomère oléfiniquement insaturé, ionique ou ionisable, et éventuellement d'au moins un troisième monomère oléfiniquement insaturé, non ionique et non ionisable,
  - au moins un solvant organique du copolymère et du polymère hydrophobe dont la température d'ébullition est supérieure à la température de mise en oeuvre de la solution, et qui est avantageusement identique à celui utilisé dans la première solution,
  - et éventuellement au moins un non solvant du polymère hydrophobe, éventuellement non solvant du copolymère, miscible avec le solvant organique et qui est avantageusement identique à celui utilisé dans la première solution.

étant entendu que l'une au moins de ces solutions doit comprendre au moins un non solvant du polymère hydrophobe tel que défini ci-dessus.

**25.** Application des membranes selon l'une des revendications 1 à 13 au traitement du sang, notamment à l'aide de reins artificiels, par hémodialyse et/ou par ultrafiltration.

**26.** Application des membranes selon l'une des revendications 1 à 13 à la plasmaphérèse.

**Patentansprüche**

1. Asymmetrische halbdurchlässige Membran mit einer Tragschicht und wenigstens einer Oberflächenschicht, die dicht, mesoporös oder mikroporös ist und Trennschicht genannt wird, wobei die Membran für die Behandlung von biologischen Flüssigkeiten geeignet ist, dadurch gekennzeichnet, daß
   - die Membran auf der Basis von wenigstens einem hydrophoben Polymer und wenigstens einem in Wasser nicht löslichen Copolymer beruht, das Copolymer auf der Basis von Acrylnitril, und außerdem auf der Basis von wenigstens einem sulfonischen Monomer, das eventuell als Salz vorliegt, und eventuell wenigstens einem dritten Monomer, das olefinisch ungesättigt, nicht ionisch und nicht ionisierbar ist, beruht,
   - die Oberflächenkonzentration an Copolymer der Trennschicht höher ist als die mittlere Konzentration an Copolymer in der Membran,
   - diese Membran im trockenen Zustand benetzbar mit Wasser ist,
   - und die jeweiligen Verhältnisse des Copolymers und des hydrophoben Polymers so eingestellt sind, daß die dimensionale Änderung der nicht festgehaltenen Membran nicht mehr als 3% überschreitet, wenn sie vom trockenen Zustand in den feuchten Zustand bei 40°C übergeht.

2. Membran gemäß Anspruch 1, dadurch gekennzeichnet, daß die Oberflächenkonzentration an Copolymer auf der äußersten Oberfläche der Trennschicht höher als 30 Gewichts% ist.

3. Membran gemäß Anspruch 1 oder 2, dadurch gekennzeichnet, daß die mittlere Konzentration an Copolymer in der Membran nicht 40 Gewichts% überschreitet.

4. Membran gemäß einem der vorherigen Ansprüche, dadurch gekennzeichnet, daß das hydrophobe Polymer so gewählt ist, daß, wenn es in Form einer halbdurchlässigen Membran vorliegt, diese eine Änderung in der Dicke oder der Länge aufweist, die nicht 0,5% überschreitet, wenn sie vom trockenen Zustand in den feuchten Zustand bei 40°C übergeht.

5. Membran gemäß einem der vorherigen Ansprüche, dadurch gekennzeichnet, daß das hydrophobe Polymer ein Polyarylsulfon ist.

6. Membran gemäß Anspruch 5, dadurch gekennzeichnet, daß das Polyarylsulfon ein Polyethersulfon ist.

7. Membran gemäß einem der Ansprüche 1 bis 4, dadurch gekennzeichnet, daß das hydrophobe Polymer ein Polyvinyliden-fluorid ist.

8. Membran gemäß einem der Ansprüche 1 bis 4, dadurch gekennzeichnet, daß das hydrophobe Polymer ein Polyvinylchlorid ist.

9. Membran gemäß einem der vorherigen Ansprüche, dadurch gekennzeichnet, daß das Verhältnis des sulfonischen Monomers, das eventuell als Salz vorliegt, in dem Copolymer zwischen 1 und 50 Mol% in Zahlenanteil liegt.

10. Membran gemäß Anspruch 9, dadurch gekennzeichnet, daß das Verhältnis des sulfonischen Monomers, das eventuell als Salz vorliegt, in dem Copolymer zwischen 3 und 15 Mol% in Zahlenanteil liegt.

11. Membran gemäß einem der vorherigen Ansprüche, dadurch gekennzeichnet, daß das Copolymer auf der Basis von Acrylnitril und Natrium-Methallylsulfonat vorliegt.

12. Membran gemäß Anspruch 7, dadurch gekennzeichnet, daß das Massenverhältnis von Polyvinylidenfluorid zum Copolymer zwischen 70/30 und 99/1 liegt.

13. Membran gemäß Anspruch 5, dadurch gekennzeichnet, daß das Massenverhältnis von Polyarylsulfon zum Copolymer zwischen 60/40 und 99/1 liegt.

14. Verfahren zur Herstellung einer Membran gemäß einem der Ansprüche 1 bis 13, gekennzeichnet durch die folgenden Schritte:
   a) Herstellung einer Lösung bestehend aus:
      - wenigstens einem hydrophoben Polymer,
      - wenigstens einem in Wasser unlöslichen Copolymer, wobei das Copolymer auf der Basis von

Acrylnitril, wenigstens einem sulfonischen Monomer, das eventuell als Salz vorliegt, und eventuell wenigstens einem dritten Monomer, das olefinisch ungesättigt, nicht ionisch und nicht ionisierbar ist, vorliegt

wobei die jeweiligen Verhältnisse des Copolymers und des hydrophoben Polymers so eingestellt sind, daß die dimensionale Änderung der Membran nicht 3% überschreitet, wenn sie vom trockenen Zustand in den feuchten Zustand bei 40°C übergeht,

- wenigstens einem organischen Lösungsmittel für das hydrophobe Polymer und das Copolymer, dessen Siedetemperatur höher ist als die Einsatztemperatur der Lösung,
- wenigstens einem Nicht-Lösungsmittel für das hydrophobe Polymer, das eventuell auch Nicht-Lösungsmittel für das Copolymer ist, und das mischbar mit dem organischen Lösungsmittel ist,

wobei die jeweiligen Verhältnisse des hydrophoben Polymers, des Copolymers, des organischen Lösungsmittels und des Nicht-Lösungsmittels so eingestellt sind, daß:

- die Lösung thermodynamisch instabil und trüb, aber dennoch makroskopisch homogen ist, und keine Entmischung bei der Einsatztemperatur erleidet,
- ein Absenken der Temperatur der Lösung eine spontane Entwicklung der Lösung zum Gelzustand hin hervorrufen würde,

b) Extrudieren der so erhaltenen Lösung durch ein Spritzmundstück,

c) Vom Verlassen des Spritzmundstücks an wird das Extrudieren von einer Koagulations-Operation durch teilweisen oder gänzlichen Kontakt des extrudierten Produktes mit einer koagulierenden Flüssigkeit gefolgt, die chemisch inaktiv gegenüber dem hydrophoben Polymer und dem Copolymer ist, und mit der :

- das hydrophobe Polymer kaum bzw. keine Affinität hat,
- das Copolymer Affinität hat, ohne in ihr löslich zu sein, wobei diese Koagulations-Operation während einer ausreichenden Dauer durchgeführt wird, um die Verfestigung des extrudierten Produktes als Membran zu erhalten,

d) dann Waschen der erhaltenen Membran,

e) gefolgt eventuell von einer Trocknung der Membran.

**15.** Verfahren gemäß Anspruch 14, dadurch gekennzeichnet, daß der Gehalt an hydrophobem Polymer und an Copolymer in der Lösung zwischen 10 und 30 Gewichts% liegt.

**16.** Verfahren gemäß Anspruch 15, dadurch gekennzeichnet, daß der Gehalt an hydrophobem Polymer und an Copolymer in der Lösung zwischen 20 und 28 Gewichts% liegt.

**17.** Verfahren gemäß einem der Ansprüche 14 bis 16, dadurch gekennzeichnet, daß der Gehalt an Nicht-Lösungsmittel in der Lösung zwischen 2 und 20 Gewichts% liegt.

**18.** Verfahren gemäß einem der Ansprüche 14 bis 17, dadurch gekennzeichnet, daß man Wasser als Nicht-Lösungsmittel benutzt.

**19.** Verfahren gemäß einem der Ansprüche 14 bis 17, dadurch gekennzeichnet, daß man eine Mischung aus Wasser und Glyzerin als Nicht-Lösungsmittel benutzt.

**20.** Verfahren gemäß einem der Ansprüche 14 bis 19, dadurch gekennzeichnet, daß die koagulierende Flüssigkeit Wasser enthält.

**21.** Verfahren gemäß Anspruch 20, dadurch gekennzeichnet, daß die koagulierende Flüssigkeit wenigstens 50 Gewichts% Wasser enthält.

**22.** Verfahren gemäß einem der Ansprüche 14 bis 21, dadurch gekennzeichnet, daß die Extrudiergeschwindigkeit höchstens gleich 20m/min ist.

**23.** Verfahren gemäß einem der Ansprüche 14 bis 22, dadurch gekennzeichnet, daß die Durchflußmenge der koagulierenden Flüssigkeit erhöht ist, damit sie so lange wie möglich ihre fällenden Eigenschaften behält.

**24.** Verfahren gemäß Anspruch 14, dadurch gekennzeichnet, daß die Lösung des Schrittes a) durch Mischen erhalten wird von:

* einer ersten Lösung bestehend aus:

- wenigstens einem hydrophoben Polymer,

- wenigstens einem organischen Lösungsmittel für das hydrophobe Polymer und das Copolymers, dessen Siedetemperatur höher ist als die Einsatztemperatur der Lösung,
- und eventuell wenigstens einem Nicht-Lösungsmittel für das hydrophobe Polymer, das mischbar mit dem organischen Lösungsmittel ist,

* und einer zweiten Lösung bestehend aus:
  - wenigstens einem in Wasser nicht löslichen Copolymer auf der Basis von Acrylnitril, wenigstens einem olefinisch ungesättigten, ionischen oder ionisierbaren Monomer, und eventuell wenigstens einem dritten olefinisch ungesättigten, nicht ionischen und nicht ionisierbaren Monomer,
  - wenigstens einem organischen Lösungsmittel für das Copolymer und das hydrophobe Polymer, dessen Siedetemperatur höher ist als die Einsatztemperatur der Lösung und das vorteilhafterweise identisch ist mit demjenigen, das in der ersten Lösung benutzt wird,
  - und eventuell wenigstens einem Nicht-Lösungsmittel für das hydrophobe Polymer, das eventuell Nicht-Lösungsmittel des Copolymers und mischbar mit dem organischen Lösungsmittel ist, und das vorteilhafterweise identisch mit demjenigen ist, das in der ersten Löung benutzt wird,

wobei es sich versteht, daß wenigstens eine dieser Lösungen wenigstens ein Nicht-Lösungsmittel für das hydrophobe Polymer, so wie oben definiert, aufweisen muß.

**25.** Anwendung der Membranen gemäß einem der Ansprüche 1 bis 13 bei der Blutbehandlung, insbesondere mit Hilfe künstlicher Nieren, durch Hämodialyse und/oder durch Ultrafiltration.

**26.** Anwendung der Membranen gemäß einem der Ansprüche 1 bis 13 bei der Plasmapherese.

## Claims

**1.** Asymmetric semipermeable membrane comprising a support layer and at least one dense or mesoporous or microporous surface layer called a separating layer, suitable for the treatment of biological liquids and characterized in that :
- the membrane is based on at least one hydrophobic polymer and at least one water-insoluble copolymer, the said copolymer being based on acrylonitrile, on at least one sulphonic monomer, in salt form if desired, and, if desired, on at least one nonionic and nonionisable, olefinically unsaturated third monomer,
- the surface concentration of copolymer in the separating layer is higher than the mean copolymer concentration in the membrane,
- this membrane is water-wettable in the dry state, and
- the respective proportions of the copolymer and of the hydrophobic polymer are adjusted so that the dimensional change of the unsupported membrane does not exceed + 3 % when it changes from the dry state to the wet state at 40°C.

**2.** Membrane according to Claim 1, characterized in that the surface concentration of copolymer at the outermost surface of the separating layer is higher than 30 % by weight.

**3.** Membrane according to Claim 1 or 2, characterized in that the mean copolymer concentration in the membrane does not exceed 40 % by weight.

**4.** Membrane according to one of the preceding claims characterized in that the hydrophobic polymer is chosen such that, when converted into the form of a semipermeable membrane, the latter exhibits a change in the thickness or length not exceeding 0.5 % when it changes from the dry state to the wet state at 40°C.

**5.** Membrane according to one of the preceding claims, characterized in that the hydrophobic polymer is a polyarylsulphone.

**6.** Membrane according to Claim 5, characterized in that the polyarylsulphone is a polyethersulphone.

**7.** Membrane according to one of Claims 1 to 4, characterized in that the hydrophobic polymer is a polyvinylidene fluoride.

**8.** Membrane according to one of Claims 1 to 4, characterized in that the hydrophobic polymer is a polyvinyl

chloride.

**9.** Membrane according to one of the preceding claims, characterized in that the proportion of sulphonic monomer, in salt form if desired, in the copolymer is between 1 and 50 % on a numerical basis.

**10.** Membrane according to Claim 9, characterized in that the proportion of sulphonic monomer, in salt form if desired, in the copolymer is between 3 and 15 % on a numerical basis.

**11.** Membrane according to one of the preceding claims, characterized in that the copolymer is based on acrylonitrile and sodium methallylsulphonate.

**12.** Membrane according to Claim 7, characterized in that the mass ratio of polyvinylidene fluoride to the copolymer is between 70/30 and 99/1.

**13.** Membrane according to Claim 5, characterized in that the mass ratio of polyarylsulphone to the copolymer is between 60/40 and 99/1.

**14.** Process for the preparation of a membrane according to one of Claims 1 to 13, characterized by the following stages:

a) preparation of a solution consisting of:

- at least one hydrophobic polymer,
- at least one copolymer which is insoluble in water, this copolymer being based on acrylonitrile, on at least one sulphonic monomer, in salt form if desired, and, if desired, at least one nonionic and nonionisable, olefinically unsaturated, third monomer,

the respective proportions of the copolymer and of the hydrophobic polymer being adjusted so that the dimensional variation of the membrane does not exceed + 3 % when it changes from the dry state into the wet state at 40°C,

- at least one organic solvent for the hydrophobic polymer and for the copolymer, whose boiling temperature is higher than the processing temperature of the solution,
- at least one nonsolvent for the hydrophobic polymer, if desired nonsolvent for the copolymer, miscible with the organic solvent,

the respective proportions of the hydrophobic polymer, copolymer, organic solvent and nonsolvent being adjusted in order that:

- the solution may be thermodynamically unstable and cloudy but nevertheless macroscopically homogeneous, and does not give rise to demixing at the processing temperature,
- a lowering of the temperature of the solution would cause the spontaneous change of the solution towards a gel state,

b) extrusion of the solution thus obtained through a die,

c) immediately following the die exit, the extrusion is followed by an operation of coagulation by partial or total contact of the extruded product with a coagulating liquid which is chemically inert towards the hydrophobic polymer and the copolymer, and for which:

- the hydrophobic polymer has little or even no affinity,
- the copolymer has affinity without being soluble therein,

this coagulation operation being carried out for a sufficient period to obtain the solidification of the extruded product as a membrane,

d) then washing of the membrane obtained,

e) followed, if desired, by drying of the membrane.

**15.** Process according to Claim 14, characterized in that the content of hydrophobic polymer and of copolymer in the solution is between 10 and 30 % by weight.

**16.** Process according to Claim 15, characterized in that the content of hydrophobic polymer and of copolymer in the solution is between 20 and 28 % by weight.

**17.** Process according to one of Claims 14 to 16, characterized in that the content of nonsolvent in the solution is between 2 and 20 % by weight.

**18.** Process according to one of Claims 14 to 17, characterized in that water is employed as a non-solvent.

**19.** Process according to one of Claims 14 to 17, characterized in that a mixture of water and of glycerine is employed as a nonsolvent.

**20.** Process according to one of Claims 14 to 19, characterized in that the coagulating liquid contains water.

**21.** Process according to Claim 20, characterized in that the coagulating liquid contains at least 50 % by weight of water.

**22.** Process according to one of Claims 14 to 21, characterized in that the speed of extrusion does not exceed 20 m/min.

**23.** Process according to one of Claims 14 to 22, characterized in that the flow rate of coagulating liquid is high in order that it may retain its precipitating properties as long as possible.

**24.** Process according to Claim 14 characterized in that the solution in stage a) is obtained by mixing :

. a first solution consisting of:

- at least one hydrophobic polymer,
- at least one organic solvent for the hydrophobic polymer and for the copolymer, whose boiling temperature is higher than the processing temperature of the solution, and
- if desired, at least one nonsolvent for the hydrophobic polymer, miscible with the organic solvent,

. and a second solution consisting of:

- at least one water-insoluble copolymer based on acrylonitrile, on at least one ionic or ionisable, olefinically unsaturated monomer and optionally on at least one nonionic and nonionisable, olefinically unsaturated, third monomer,
- at least one organic solvent for the copolymer and for the hydrophobic polymer, whose boiling temperature is higher than the processing temperature of the solution and which is advantageously identical with that employed in the first solution,
- and, if desired, at least one nonsolvent for the hydrophobic polymer, if desired nonsolvent for the copolymer, which is miscible with the organic solvent and which is advantageously identical with that employed in the first solution,

  it being understood that at least one of these solutions must comprise at least one nonsolvent for the hydrophobic polymer as defined above.

**25.** Application of the membranes according to one of Claims 1 to 13 to the treatment of blood, especially with the aid of artificial kidneys, by haemodialysis and/or by ultrafiltration.

**26.** Application of the membranes according to one of Claims 1 to 13 to plasmapheresis.